# NEW EUROPEAN PATENT SPECIFICATION

(11) **EP 1 723 876 B2**
(45) Date of publication and mention of the opposition decision: **15.06.2022**
(45) Mention of the grant of the patent: 01.12.2010
(21) Application number: 05720834.0
(22) Date of filing: 09.03.2005
(51) Int. Cl.: A47C 7/74, B60N 2/00

(54) **AIR CONDITIONED SEAT DEVICE AND AIR CONDITIONING SYSTEM USING THE SAME**
KLIMATISIERTER SITZ UND SELBIGEN VERWENDENDE KLIMAANLAGE
SIEGE AIR CONDITIONNE ET SYSTEME DE CONDITIONNEMENT D'AIR UTILISANT CELUI-CI

(30) Priority: 09.03.2004 JP 2004065171; 09.03.2004 JP 2004065172; 09.03.2004 JP 2004065173; 09.03.2004 JP 2004065194; 11.03.2004 JP 2004068560; 11.03.2004 JP 2004068565
(43) Date of publication of application: 22.11.2006
(73) Proprietor: Panasonic Holdings Corporation, Osaka 571-8501 (JP)
(72) Inventor: YONENO, Noriyuki c/o Panasonic Corporation, Chuo-ku,Osaka-shi, Osaka 540-6319 (JP); KIKUTANI, Fumitaka c/o Panasonic Corporation, Chuo-ku,Osaka-shi, Osaka 540-6319 (JP); NITTA, Hiroaki c/o Panasonic Corporation, Chuo-ku,Osaka-shi, Osaka 540-6319 (JP); NOZAWA, Shintarou c/o Panasonic Corporation, Chuo-ku,Osaka-shi, Osaka 540-6319 (JP); SHIGEOKA, Takehiko c/o Panasonic Corporation, Chuo-ku,Osaka-shi, Osaka 540-6319 (JP); SHIRATAKE, Akira c/o Panasonic Corporation, Chuo-ku,Osaka-shi, Osaka 540-6319 (JP); ASAMI, Naohito c/o Panasonic Corporation, Chuo-ku,Osaka-shi, Osaka 540-6319 (JP); NAKANO, Koichi c/o Panasonic Corporation, Chuo-ku,Osaka-shi, Osaka 540-6319 (JP); ARIMA, Satoshi c/o Panasonic Corporation, Chuo-ku,Osaka-shi, Osaka 540-6319 (JP)
(74) Representative: Balsters, Robert
(86) International application number: PCT/JP2005/004579
(87) International publication number: WO 2005/084494

(56) References cited:
- DE-A1- 10 313 013
- DE-A1- 19 910 390
- JP-A- 5 277 020
- JP-A- 5 286 343
- JP-A- 11 123 931
- JP-A- 2002 174 474
- JP-A- 2003 157 958
- JP-A- 2003 285 628
- JP-A- 2003 299 551
- JP-A- 2003 300 409
- JP-A- 2004 042 706
- US-A1- 2003 150 229
- US-A1- 2003 197 404

## Description

### TECHNICAL FIELD

The present invention relates to an air conditioned seat device used for an automobile seat and an office chair, for example, that promptly provides a human body with a comfortable state even in an environment with uncomfortable outside air temperature. The invention particularly relates to an air conditioned seat device that provides a healthy comfortable sense of seating according to individual preference, and to an air conditioning system using the air conditioned seat device.

### BACKGROUND ART

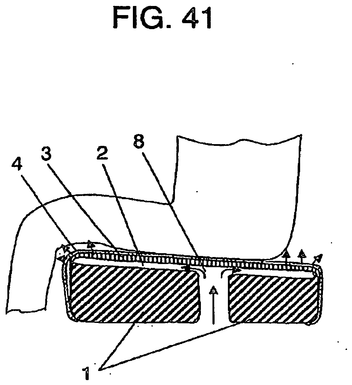

An air conditioned seat device with the structure as shown in Fig. 41 has been conventionally disclosed in the Japanese translation of PCT publication No. H9-505499, for example. In this air conditioned seat device, air duct 2 is formed in support member 1 inside the seat, and the outer side of support member 1 is covered with porous member 3. Porous seat cover 4 such as leather with small holes therethrough encompasses porous member 3, located opposite to support member 1; and conditioned air 8, with its temperature and humidity conditioned, blows out through seat cover 4.

In this air conditioned seat device, the air blows out through duct 2 and small holes in seat cover 4 communicating with duct 2. While a human body is seated, the sent air does not flow out through the holes in seat cover 4 at portions that is in contact with the human body, but flows out through those at portions that is not in contact with the human body. Therefore, even if dry air is sent, it does not blow on the human body contacting the seat. Consequently, sweat is not sufficiently vaporized to resolve steaminess. A pressure applied while a human body is seated deforms support member 1 to block a part of duct 2, possibly preventing air from circulating around the entire seat. Meanwhile, small holes in seat cover 4, through which air from the air blower blows out, influence on the design. For example, small holes cannot be provided in seat cover 4 where air from the air blower is not desired to blow out, which will largely constrain the design.

A further air conditioned seat device is disclosed in DE 10313013 A1.

### SUMMARY OF THE INVENTION

An air conditioned seat device according to the present invention is described in claim 1. With the above-mentioned makeup, blowing out of air is regulated by the air flow-out opening in the sheet member, and an airflow path is ensured even if a pressure is applied while a human body is seated, thus allowing air to circulate around the entire seat. Consequently, the common makeup can be used even if the seat design and conditions change, independently of the blow-out condition of air sent by the air blower.

### BRIEF DESCRIPTION OF THE DRAWINGS

Fig. 1 is a sectional view of an air conditioned seat device according to a first exemplary embodiment of the present invention.
Fig. 2 is a schematic diagram of a PTC heater incorporated in an air conditioned seat device according to exemplary embodiments of the present invention.
Fig. 3 shows graphs of surface temperature, skin humidity, and output for an air blower in the air conditioned seat device shown in Fig. 1.
Fig. 4 shows graphs of surface temperature, skin humidity, and output for an air blower in the air conditioned seat device shown in Fig. 1 under other control conditions.
Fig. 5 is a sectional view of an air conditioned seat device according to a second exemplary embodiment of the present invention.
Fig. 6 shows graphs of surface temperature, skin humidity, and output for an air blower in the air conditioned seat device shown in Fig. 5.
Fig. 7 is a sectional view of an air conditioned seat device according to a third exemplary embodiment of the present invention during its recycle-mode operation.
Fig. 8 is a sectional view of the air conditioned seat device shown in Fig. 7 during its dehumidify-mode operation.
Fig. 9 is a time chart for a set of actions in each mode of the air conditioned seat device shown in Fig. 7.
Fig. 10 is a time chart for another set of actions in each mode of the air conditioned seat device shown in Fig. 7.
Fig. 11 is a time chart for yet other set of actions in each mode of the air conditioned seat device shown in Fig. 7.
Fig. 12 is a time chart for a still further set of actions in each mode of the air conditioned seat device shown in Fig. 7.
Fig. 13 is a time chart for yet another set of actions in each mode of the air conditioned seat device shown in Fig. 7.
Fig. 14 is a sectional view of another air conditioned seat device according to the third exemplary embodiment of the present invention.
Fig. 15 is a time chart for a set of actions in each mode of the air conditioned seat device shown in Fig. 14.
Fig. 16 is a sectional view of still another air conditioned seat device according to the third exemplary embodiment of the present invention.
Fig. 17 is a time chart for a set of actions in each mode of the air conditioned seat device shown in Fig. 16.
Fig. 18 is a sectional view of yet another air conditioned seat device according to the third exemplary embodiment of the present invention.
Fig. 19 is a time chart for a set of actions in each mode of the air conditioned seat device shown in Fig. 18.
Fig. 20 is a sectional view of still another air conditioned seat device according to the third exemplary embodiment of the present invention.
Fig. 21 is a time chart for a set of actions in each mode of the air conditioned seat device shown in Fig. 20.
Fig. 22 is a sectional view of still another air conditioned seat device according to the third exemplary embodiment of the present invention.
Fig. 23 is a time chart for a set of actions in each mode of the air conditioned seat device shown in Fig. 22.
Fig. 24 is a perspective view of an air conditioned seat device according to a fourth exemplary embodiment of the present invention.
Fig. 25 is a perspective view of an air conditioned seat device according to a fifth exemplary embodiment of the present invention.
Fig. 26 is a sectional view of an air conditioned seat device according to a sixth exemplary embodiment of the present invention.
Fig. 27 is a sectional view of another air conditioned seat device according to the sixth exemplary embodiment of the present invention.
Fig. 28 is a perspective view illustrating a support member and a skin in the air conditioned seat device shown in Fig. 27.
Fig. 29 is a perspective view illustrating another skin in the air conditioned seat device shown in Fig. 27.
Fig. 30 is a sectional view of yet another air conditioned seat device according to the sixth exemplary embodiment of the present invention.
Fig. 31 is a perspective view of the air conditioned seat device shown in Fig. 30.
Fig. 32 is a sectional view of still another air conditioned seat device according to the sixth exemplary embodiment of the present invention.
Fig. 33 is a perspective view of the air conditioned seat device shown in Fig. 32.
Fig. 34 is a sectional view of the seating portion of still another air conditioned seat device according to the sixth exemplary embodiment of the present invention.
Fig. 35 is a sectional view of yet another air conditioned seat device according to the sixth exemplary embodiment of the present invention.
Fig. 36 is a sectional view of a still further air conditioned seat device according to the sixth exemplary embodiment of the present invention.
Fig. 37 is a perspective view illustrating a support member in the air conditioned seat device shown in Fig. 36.
Fig. 38 is a sectional view of a furthermore air conditioned seat device according to the sixth exemplary embodiment of the present invention.
Fig. 39 is a block diagram of an air conditioning system according to a seventh exemplary embodiment of the present invention.
Fig. 40 is a block diagram of an air conditioning system according to the seventh exemplary embodiment of the present invention.
Fig. 41 is a sectional view of a conventional air conditioned seat device.

### DETAILED DESCRIPTION OF PREFERRED EMBODIMENTS

Hereinafter, descriptions are made for exemplary embodiments of the present invention with reference to the related drawings. The present invention is not limited by these embodiments. The same mark is given to a component similar to that in preceding exemplary embodiments in its description, to omit its detailed description.

### FIRST EXEMPLARY EMBODIMENT

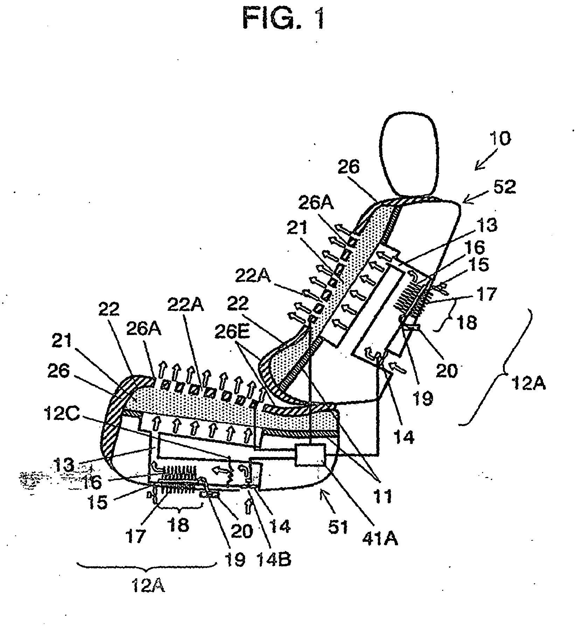

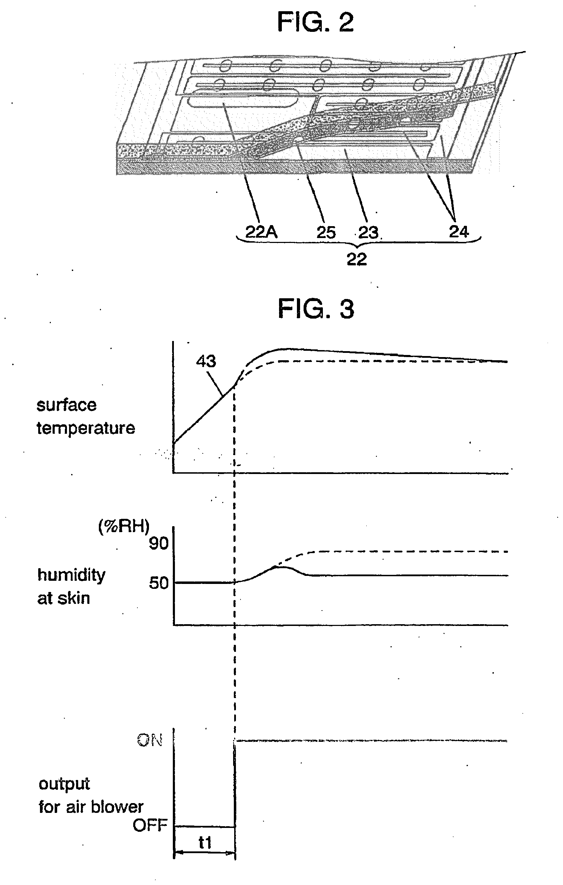

Fig. 1 is a sectional view of an air conditioned seat device according to the first exemplary embodiment of the present invention. Fig. 2 is a schematic diagram of a PTC heater used for the air conditioned seat device.

In seating portion 51, support member 11 forming the framework of the seat is provided with duct 13, a first duct passing air therethrough. Air conditioning unit ("conditioning unit" hereinafter) 12A for conditioning air is disposed halfway through duct 13. Air blower 14 such as a sirocco fan, a first air blower located at the bottom of the seat, takes air in through air inlet 14B provided in a part except seating surface 26E and sends the air to conditioning unit 12A. The conditioned air is sent toward seating surface 26E through duct 13. Support member 11 has elasticity in which the squash depth of the hip joint position is at least 30 mm and at most 200 mm when a typical human body weighing 75 kg is seated. The elasticity causes decreasing the body pressure distribution to improve seating comfort, thus decreasing user's fatigue.

Conditioning unit 12A is composed of peltiert element 15. Peltiert element 15 has first heat exchanger 16 at its cold junction and second heat exchanger 17 at its hot junction. Conditioning unit 12A has dehumidifier 18, a first dehumidifier; drainpipe 19; and evaporating pan 20. Dehumidifier 18 condenses vapor in the air sent from air blower 14 at first heat exchanger 16 to dehumidify the air. Drainpipe 19 collects water condensed by dehumidifier 18. Evaporating pan 20 vaporizes the water collected in drainpipe 19. In the makeup in Fig. 1, conditioning unit 12A cools the air sent by air blower 14 to dehumidify it, and thus second heat exchanger 17 is exposed outside. However, exchanger 17 may be arranged inside if air needs to be warmed. Back portion 52 has the same structure as that of seating portion 51 as shown in Fig. 1.

Air layer member (member, hereinafter) 21 is disposed on support member 11. That is, member 21 is provided between support member 11 and skin 26. Member 21 made of a porous body with elasticity and high air permeability, such as a sponge-like porous body with a large diameter of air holes, temporarily stores the air supplied from duct 13 to form an air layer. Specifically, member 21 has an elastic modulus equal to or smaller than that of support member 11 and a pressure loss between 0 Pa to 100 Pa inclusive at airflow rate of 0.1 m³ per minute.

PTC heater 22, a sheet member, made of air-impermeable material, has air flow-out opening (opening, hereinafter) 22A for regulating air flowing out from the air layer, and covers member 21. PTC heater 22 has electrode 24 and heating element material 25 disposed on air-impermeable electrically insulating substrate 23 with a self-temperature-control function. Skin 26, having air outlets 26A, composed of skin, seat cover, and others, is disposed so as to cover PTC heater 22. PTC heater 22, a heating element, is used as a sheet member in this way to allow air conditioned seat device 10 to also heat a human body.

Skin 26 is provided with a large number of outlets 26A to form seating surface 26E passing the air sent by air blower 14. Control unit 41A controls energization of PTC heater 22 and driving of air blower 14.

Hereinafter, a description is made for actions of air conditioned seat device 10 composed as mentioned above. The air sent by air blower 14, after being dehumidified by conditioning unit 12A, is led to member 21 through duct 13. The air then blows out from outlets 26A in skin 26 through opening 22A of PTC heater 22 covering member 21.

The blown-out air reaches clothes and a skin surface of a human body, and this dry air vaporizes sweat to prevent steaminess. Member 21 is made of a porous body with elasticity and high air permeability, and its deformation volume ranges between 1% and 90% inclusive. Consequently, member 21 retains air permeability against compression caused by the weight of a human body while being seated. To sufficiently retain air permeability, a preferable deformation volume is between 1% and 10% inclusive. In this case, the dehumidified air can be sent to the buttocks even if opening 22A is provided at the seating position of the buttocks that is compress deformed most largely while being seated, thus preventing steaminess at the buttocks. Meanwhile, using member 21 with the aforementioned elastic modulus and air permeability, air blower 14 made of a small sirocco fan with a diameter of approximately 70 mm can also send air; support member 11 supports the weight of the user; and member 21 uniformizes the body pressure distribution, thus improving seating comfort.

Here, air-impermeable PTC heater 22 has opening 22A covering member 21 and controlling airflow out from member 21. This allows forming member 21 with a large volume, thus filling the entire seat with the air from duct 13. That is to say, as a result of sending air to member 21, the entire seat remains being filled with air, which can be blown out from any part of the seat. Still, the air can be blown out from opening 22A of air-impermeable PTC heater 22 provided in predetermined places through outlets 26A in skin 26. When air is sent to member 21 particularly made of porous body with elasticity and high air permeability, member 21 is filled with air uniformly. Then, the air stably blows out from the outlets in skin 26 through opening 22A of PTC heater 22. This makeup, dispensing with an airflow path, beam and column, and the like, simplifies the structure.

As mentioned above, the blow-out position of air can be adjusted according to the position and shape of opening 22A, which allows air to be blown out that is optimum to seating conditions and the like, according to the seat design and shape. Therefore, member 21 can be common even if the seat design and others change, because member 21 is not influenced by blow-out conditions of air. Further, design of skin 26 can be more flexible, because the blow-out position of air can be regulated by opening 22A. PTC heater 22, covering member 21, allows a load to be applied to entire member 21, and the deformation volume to be reduced, when a load caused by seating or the like is applied, resulting in load bearing and durability increased owing to a synergistic effect of PTC heater 22 and member 21.

If using the method of bonding any two components out of skin 26, PTC heater 22, and member 21, through heat-melting bonding material, bonding can be performed by passing steam from the skin 26 side through opening 22A. This method tightly bonds these components, particularly near opening 22A of PTC heater 22.

The description aforementioned is on actions and advantages common in cooling and heating. Next, actions in heating are mainly described. In heating, control unit 41A energizes PTC heater 22 to heat the vicinity of seating surface 26E. Meanwhile, dry air blows out from outlets 26A, the air that has been sent through air blower 14, conditioning unit 12A, duct 13, and member 21. This air is warmed by an air conditioning device for heating the cabin where air conditioned seat device 10 is arranged, for example, and thus the user is indirectly heated by the air as well. Therefore, the user is heated without feeling steaminess at his or her buttocks. That is, PTC heater 22 heats the user directly with heat conduction through skin 26. The user feels warmth quickly, thus improving comfort. When the user uses only PTC heater 22 for heating for a long time, he or she may feel steaminess even in winter; however, when air conditioned by conditioning unit 12A is sent by air blower 14, the steaminess is resolved, thus improving comfort.

Here, reversing the polarity of peltiert element 15 in conditioning unit 12A causes air sent by air blower 14 to be warmed for heating. In this case, however, conditioning unit 12A requires its rising time, and rise in temperature requires some time due to the large heat capacities of the duct for air warmed by conditioning unit 12A, and of member 21. Consequently, some time is required before the user feels warmth, thus impairing comfort at first use. Meanwhile, in air conditioned seat device 10 according to this embodiment, PTC heater 22, a sheet-like heating element disposed near seating surface 2E, heats the user directly with heat conduction through skin 26. The user feels warmth quickly, thus improving comfort.

PTC heater 22 has a self-temperature-control function and a sheet-like, wide heating area, thus lowering the temperature at its heating surface, to improve comfort as well as safety. On the other hand, if a linear heater is used for the sheet-like heating element; for example, it has a linear, small heating area, thus raising the temperature at its heating surface. To maintain the average surface temperature at 40°C, for example, the temperature at its heating area has to be controlled for 70°C to 120°C locally, and a complicated structure with a temperature controller such as a thermostat is needed. The locally high temperature may cause problems due to heating including burn injuries. Further, the uneven temperature distribution impairs comfort. Furthermore, as the temperature difference from its surrounding environments is large, heating loss is large when being unused or at a part not contacting a human body, causing large power consumption. Contrarily, in a case PTC heater 22 is used for the sheet-like heating element, the heating portion is sheet-like with a large area. To maintain the average surface temperature at 40°C, the temperature at its heating portion can be controlled for 45°C to 50°C. Furthermore, the self-temperature-control function, dispensing with a temperature controller such as a thermostat, simplifies the structure. The temperature not so high frees the user from concern for burn injuries; the uniform temperature distribution improves comfort; and the small temperature difference from its surrounding environments reduces heat loss and power consumption.

With the makeup where dehumidifier 18 is placed before air blower 14 outside the seat body to send air dehumidified by air blower 14, the same advantage is available. Besides peltiert element 15, a compression type freezer provides the same advantage.

Here, if a sufficient air conditioning effect is available simply by sending air, conditioning unit 12A is not required. Skin 26, provided with outlets 26A, does not necessarily need visible holes, as long as skin 26 is air-permeable.

In Fig. 1, air blowers 14 and conditioning units 12A are provided at both seating portion 51 and back portion 52 of air conditioned seat device 10; however, they may be provided at either one. An air duct may be further provided for sending air from the side where they are provided to the other. Members 21, PTC heaters 22, and others are provided at both seating portion 51 and back portion 52 of the seat for air-conditioning; however, they may be provided at either of them, and whatever makeup of the other components may be adopted as long as it attains the objective of the present invention. The sheet member, besides PTC heater 22, may be a string type heater, or a heater may be absent.

As shown in Fig. 1, a heating device such as an electric heater may be arranged at the duct 13 side of air blower 14, as air conditioning unit (conditioning unit, hereinafter) 12C for conditioning air sent from air blower 14. With this makeup, the air sent from air blower 14 is warmed, and the warm air is always blown out from outlets 26A, thus giving stronger warmth than heated only by PTC heater 22.

Next, a description is made for detailed actions of control unit 41A. Fig. 3 shows graphs of surface temperature, humidity at the skin of a seated human body, and output to air blower 14, in the air conditioned seat device 10 shown in Fig. 1. A broken line shows a case without an air blower; a solid line shows a case of this embodiment.

After starting energization of PTC heater 22, the surface temperature gradually rises. However, when air blower 14 is driven simultaneously with the energization of PTC heater 22, the user feels colder due to the sent air in a cold environment. This is because rise in temperature requires some time due to the large heat capacities of duct 13 and member 21. If air blower 14 is driven when the surface temperature reaches a certain level, the heat stored in members surrounding PTC heater 22 then transfers to the air sent by blower 14 in the process of passing through duct 13 and member 21. Consequently, the warm air is blown out from outlets 26A, and the surface temperature changes as shown by curve 43, to improve a sense of warmth. That is, air conditioned seat device 10 can warm the air in member 21 as well by PTC heater 22, with its fast heating capability retained, and can send sufficiently warm air at a burst. Accordingly, the user feels warmth more strongly, thus significantly improving comfort synergistically. Experiments prove that preferable time "t1" after starting energization of heater 22 until starting driving air blower 14 is 3 to 5 minutes.

When air blower 14 is driven continuously after "t1" elapses, although the surface temperature temporarily rises and then gradually drops owing to the sent air, the humidity at the human skin remains almost unchanged at a low level, thus steaminess is prevented.

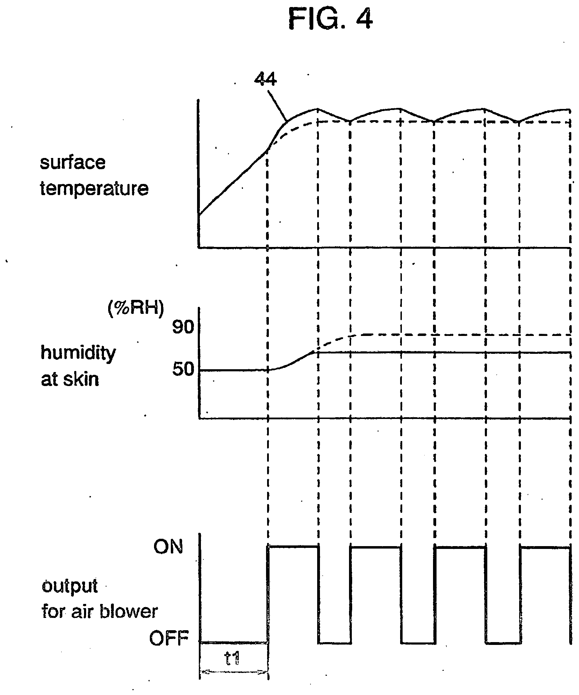

Fig. 4 shows graphs of surface temperature, humidity at the skin of a seated human body, and output to air blower 14, in a case where air blower 14 is intermittently driven after a certain period of time "t1" elapses after starting energization of PTC heater 22. A broken line shows a case without an air blower; a solid line shows a case of this embodiment.

As aforementioned, air blower 14, driven after "t1" elapses, allows warm air to be blown out from outlets 26A, and the surface temperature changes as shown by curve 44, to improve warmth. By intermittently driving air blower 14 as well, the air sent by blower 14 is heated while passing through the surrounding materials heated by PTC heater 22. Then, the temperature of air blown out from outlets 26A provided in skin 26 rises to increase a sense of warmth.

When the surface temperature reaches the saturated region, the temperature in the cabin rises to 20°C to 25°C, causing the user to feel steaminess. However, intermittently driving air blower 14 to send air to the surface of the human body prevents steaminess.

As aforementioned, control unit 41A preferably controls driving air blower 14 after a certain period of time elapses from starting energization of PTC heater 22 when heating. Further, control unit 41A preferably controls driving air blower 14 intermittently after starting energization of PTC heater 22.

Besides the above-mentioned control actions, control unit 41A may control PTC heater 22 and air blower 14 so as to alternately perform energization of PTC heater 22 and driving of air blower 14 to send air from duct 13 intermittently. In this case, the air in member 21 warmed by PTC heater 22 can be used for heating the user, and heating by PTC heater 22 and by air sent from air blower 14 are intermittently applied, allowing the user to feel a sense of warmth more strongly. In addition, PTC heater 22 and air blower 14 are not simultaneously energized, namely either one of the maximum electric capacities is reached, thus reducing the overall maximum electric capacity.

### SECOND EXEMPLARY EMBODIMENT

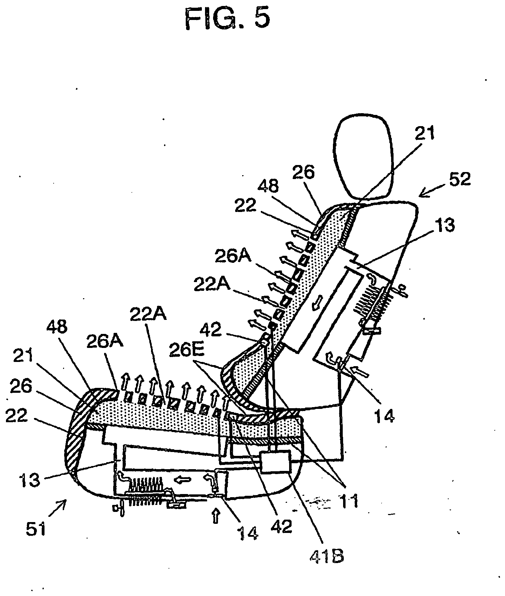

Fig. 5 is a longitudinal sectional view of an air conditioned seat device according to the second exemplary embodiment of the present invention. In this embodiment, surface temperature sensor (sensor, hereinafter) 42 made of such as a thermistor is arranged at a position where PTC heater 22 does not contact the human body and its temperature is equivalent to the surface temperature. That is, sensor 42 senses the temperature near skin 26, and then outputs a sensing signal to control unit 41B. Control unit 41B controls PTC heater 22 and air blower 14 according to the signal from sensor 42. Flexible pad 48 such as a thin sponge-like pad with high air permeability is disposed between PTC heater 22 and skin 26. The makeup otherwise is the same as that of the first exemplary embodiment.

In the above-mentioned makeup, control unit 41B drives air blower 14 when the surface temperature reaches "T1" after starting energization of PTC heater 22; and stops air blower 14 when the surface temperature drops to "T2", which is lower than "T1". Here, sensor 42 outputs a first value for "T1", and a second value for "T2", lower than the first value. In other words, control unit 41B drives air blower 14 when output from sensor 42 reaches or exceeds the first value after starting energization of PTC heater 22, and stops air blower 14 when output from sensor 42 drops to the second value. For example, "T1" and "T2" are set to 36°C and 34°C, respectively.

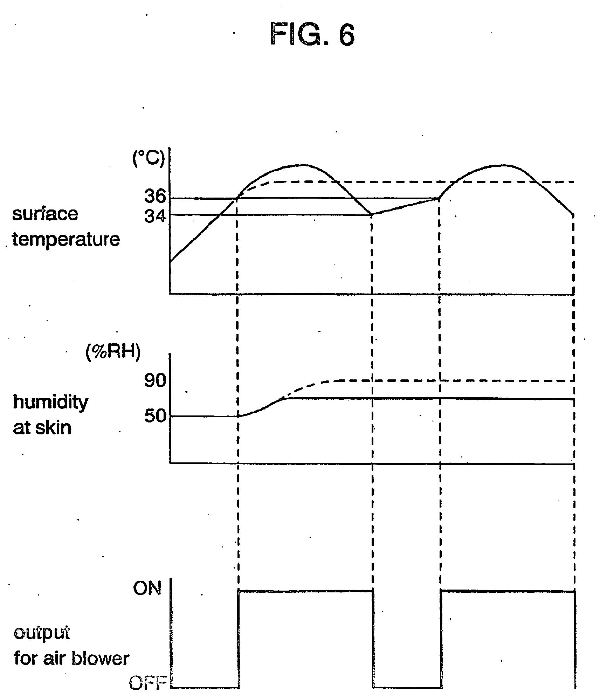

Fig. 6 shows graphs of surface temperature sensed by sensor 42, humidity at the skin of a seated human body, and output to air blower 14, after starting energization of PTC heater 22. A broken line shows a case without air blower 14; a solid line shows a case of this embodiment.

In the present embodiment, when the surface temperature reaches the set temperature of 36°C, air blower 14 is driven, and the air sent by air blower 14 blows out from outlets 26A through duct 13 and member 21. At this moment, the warm air accumulated in materials surrounding PTC heater 22 then is blown out from outlets 26A to raise the skin temperature, thus improving a sense of warmth. After then, if sending air is continued, the skin temperature begins to drop because the temperature in the cabin is approximately 25°C, and air blower 14 is stopped when the skin temperature drops to the set temperature of 34°C. When air blower 14 stops to quit sending air, the surface temperature begins to rise, and then air blower 14 is driven again at 36°C, and the skin temperature rises-at an accelerating rate. During this time, the humidity at the human skin remains roughly constant at a low level, thus steaminess is prevented. Here, the makeup and control actions for stopping air blower 14 according to output from sensor 42 may be applied to the first exemplary embodiment.

Flexible pad 48 such as a thin sponge-like pad with high air permeability is disposed between PTC heater 22 and skin 26. In this makeup, even if a material lacking flexibility to some degree is used for PTC heater 22 in order to enhance the strength and the like of air-impermeable PTC heater 22, pad 48 supplements the flexibility and the like. This increases degree of freedom in choosing material for PTC heater 22, thus allowing comfort while being seated to be improved. Therefore, the elastic modulus of pad 48 is preferably equal to or lower than that of support member 11, more preferably equal to or lower than that of member 21. Since pad 48 is located between outlets 26A in skin 26 and opening 22A of PTC heater 22, opening 22A of PTC heater 22 disappears from the surface of skin 26, thus enhancing the appearance. This makeup may be applied to the other exemplary embodiment.

### THIRD EXEMPLARY EMBODIMENT

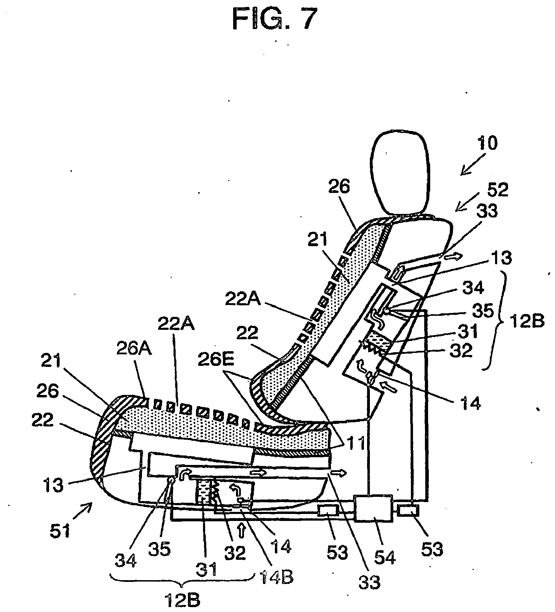

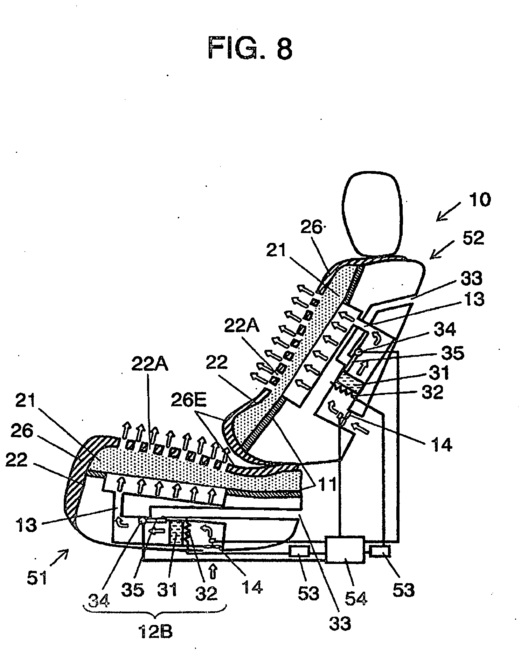

Fig. 7 is a sectional view of an air conditioned seat device according to the third exemplary embodiment of the present invention, during a recycle-mode operation. Fig. 8 is a sectional view of the same during a dehumidify-mode operation.

In the present embodiment, air conditioning unit 12B is provided with dehumidifier 31 having a dehumidification agent (adsorbent) such as zeolite or silica gel with an adsorptive property. The dehumidification agent in dehumidifiers 31 is heated by heater units 32, which are first and second heater units such as electric heaters, through convection, radiation, or conduction. Vent 33 is further provided to communicate dehumidifier 31 to the outside of air conditioned seat device 10. Outlet air duct selector (selector, hereinafter) 35 which is a damper or the like is provided to be driven by stepping motor 34 or the like. Selector 35 closes duct 13 when vent 33 is opened and opens duct 13 when vent 33 is closed. Control unit 54 is connected to air blower 14, selector 35, and heater unit 32 through power level adjusting unit 53 such as a DC-DC converter. Control unit 54 controls driving of air blower 14, position of selector 35, and energization of heater unit 32. The makeup otherwise is the same as that of the first exemplary embodiment.

In the above-mentioned makeup, a recycle-mode operation in which first dehumidifier 31 recovers its dehumidification performance is performed. Selector 35 is controlled to be positioned where vent 33 is opened; heater unit 32 is driven; and after air blower 14 is first stopped for "t1" (e.g. 20 seconds), air blower 14 is driven for "t2" (e.g. 1 second) at a flow rate of 0.2 m³ per minute. These actions are repeated from then on.

When silica gel used as a dehumidification agent is heated to 120°C, watery vapor starts desorbing from the dehumidification agent, and air blower 14 discharges the generated vapor to the inside of the cabin from vent 33. In this case, while heat generated by heater unit 32 transmits to the surface of the dehumidification agent, air blower 14 is not driven when the surface of the dehumidification agent is low in temperature. Consequently, the surface temperature of the dehumidification agent rises quickly, thus causing vapor to desorb from the dehumidification agent quickly. Additionally, sending air intermittently rather than at a constant flow rate of 0.01 m³ per minute increases the surface temperature of the adsorbent. Accordingly, the amount of heat transfer to the inside of the adsorbent increases through Fourier's law to shorten the recycle time. Further, not requiring adjusting the blow volume simplifies the makeup of the device.

After the recycle mode completes, a dehumidify-mode operation as shown in Fig. 8 is performed. In the dehumidify mode, selector 35 is controlled to be positioned where vent 33 is closed, and air blower 14 is driven. Air blower 14 sends in-cabin air (e.g. 35°C, 55%RH) to dehumidifier 31 at a flow rate of 0.2 m³ per minute. Vapor in the sent air is adsorbed by the dehumidification agent in dehumidifier 31, so that the sent air decreases in its humidity while heated with its adsorption heat, resulting in a high temperature and low humidity (e.g. 48°C, 18%RH). This air, led to duct 13, blows out from outlets 26A in skin 26 through member 21. Then, the air blows onto the human body surface and clothes, and the dry air that has reached the clothes and skin surface vaporizes sweat, to prevent the steaminess of the user.

In this way, dry air absorbs vaporization latent heat by vaporizing sweat on the human body surface to give the user coolness. Even if the human body does not contact seating surface 26E of air conditioned seat device 10, the blown out air reaches the unseated human body facing seating surface 26E to absorb vaporization latent heat, resulting in reliably providing a wide range of human body with coolness.

As mentioned above, air conditioned seat device 10 according to the present embodiment dehumidifies air in the cabin using dehumidifier 31 having an adsorbent such as silica gel and zeolite. Then, device 10 blows out the dehumidified air from outlets 26A in the seat body and vaporizes sweat on the human body surface to absorb vaporization heat, thus promptly providing the human body with coolness. After the sweat is vaporized, sweat perspired from the human body after then is dehumidified to prevent steaminess. Further, PTC heater 22, a heater unit provided near skin 26, supplies the human body with heat through heat conduction to provide a moderate sense of warmth as well. Arbitrarily setting the senses of coolness and warmth according to individual preference implements an air-conditioning environment comfortable for a human body

A dehumidification agent such as zeolite and silica gel having adsorptive effect used as dehumidifier 31 dispenses with disposal of dew condensation water, unlike with a method of dehumidifying through dew condensation with a peltiert element or the like. The dehumidifier can dehumidify air even with a low dew point in winter or the like, to prevent steaminess due to seating for a long time in winter. Further, heater unit 32 for heating a dehumidification agent is provided to allow the dehumidification agent to be recycled for prolonged stable dehumidification, thus implementing a comfortable air-conditioning environment.

If dehumidifier 31 is structured as an adsorbent supported on the surface of heater unit 32 such as stainless-steel wire mesh, the recycle-mode time may be as short as approximately 30 seconds, thus dehumidified air desirably stops in a recycle mode for a short time.

The present embodiment may be provided with control units 41A, 41B, and sensor 42 described in the first and second exemplary embodiments. These control units may be integrated with control unit 54.

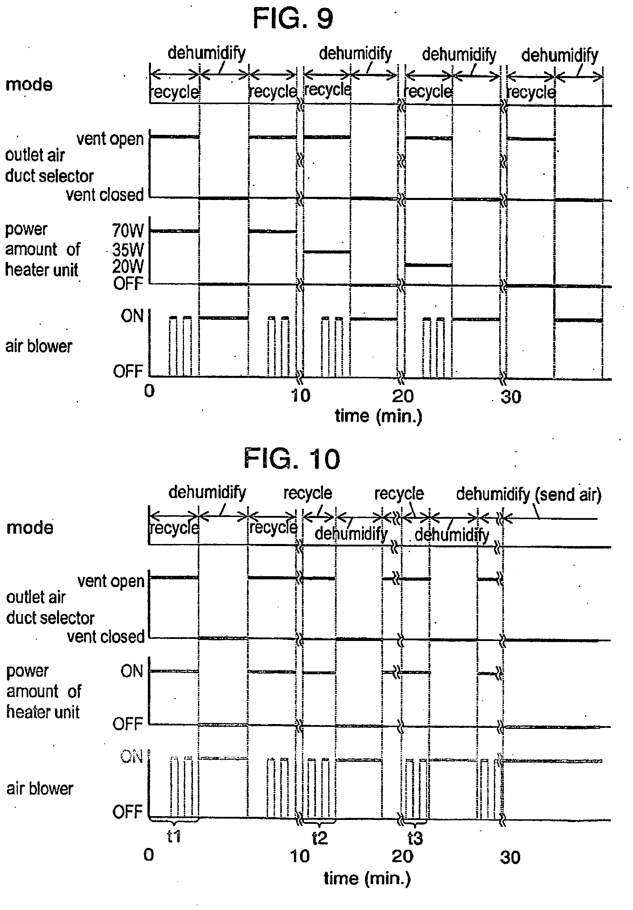

Next, a detailed description is made for various kinds of control actions by control unit 54 in recycle and dehumidify modes. Fig. 9 is a time chart for actions in each mode. In the first control action shown in Fig. 9, control unit 54 controls so that the energizing amount for heater unit 32 in a recycle mode is maximized immediately after starting operation. That is, control unit 54 controls power level adjusting unit 53 so that the energizing amount for heater unit 32 is maximized in the first recycle mode and is reduced in recycle modes after a certain period of time elapses. Here, energizing amount is assumed to be a product of energization power by energization time. In the first control action, energization power out of these two elements is controlled.

A description is made for the actions in the above-mentioned makeup. A condition in the cabin is assumed to be approximately .: 50°C, 25%RH in summer. As shown in Fig. 9, control unit 54 performs a recycle-mode operation for 30 seconds where dehumidifier 31 recovers its dehumidification performance. Specifically, control unit 54 controls selector 35 to a position to open vent 33, and increases the output voltage supplied from power level adjusting unit 53 to drive heater unit 32 at 70 W, for example. At this moment, after air blower 14 is stopped for 10 second first, air blower 14 is driven for 1 second at a flow rate of 0.3 m³ per minute. These actions are repeated from then on. After the recycle-mode operation completes, control unit 54 controls each component so that a dehumidify-mode operation is performed for 30 seconds.

When the car air-conditioner is driven, the in-cabin temperature and humidity gradually drop to 35°C, 50%RH in 10 minutes, and to 25°C, 50%RH in 30 minutes. Accordingly, even if control unit 54 controls the energizing amount for heater unit 32 to 35 W when recycling after 10 minutes or later after starting operation; and to 20 W, after 20 minutes or later, a sufficient sense of coolness is provided. In a steady state after 30 minutes or later, even if the energizing amount in a recycle mode is 0 W, the temperature and humidity of the air blown out from the outlets by the air conditioner is suppressed to a low level, and thus moderate coolness is available while decreasing the humidity at seating surface 26E. That is, control unit 54 controls the power applied to heater unit 32 through power level adjusting unit 53 and gradually reduces the power applied to heater unit 32.

As mentioned above, in the air conditioned seat device using adsorption type dehumidifier 31 dispensing with disposal of dew condensation water, the user can enjoy coolness rapidly even at a high in-cabin temperature. Meanwhile, when the room temperature decreases owing to the effect of the in-cabin air-conditioning, the user feels moderate coolness without feeling steaminess, while the power consumption decrease.

Next, a description is made for a second control action with which control unit 54 controls the energization time for heater unit 32. Fig. 10 shows a time chart for actions in each mode.

In this control action, control unit 54 controls so that the recycle time is long immediately after starting a recycle-mode operation. That is, the recycle-mode time (t1) is 30 seconds, for example, for 10 minutes after starting operation. Meanwhile, after a certain period of time, for example 10 to 20 minutes, elapses after starting operation, when the in-cabin air conditioner becomes effective, the recycle-mode time (t2) is 20 seconds, for example. After 20 minutes or later, when the cabin temperature drops to 25°C or lower, the recycle-mode time (t2) is 10 seconds, for example. In such a manner, control unit 54 controls so that the recycle-mode time reduces sequentially. In a steady state after 30 minutes or later, the recycle-mode time may be controlled to 0, namely continuous dehumidification (sending air) may be performed. Even if such operation is performed, the temperature and humidity of the air blown out from outlets 26A are suppressed to a low level by the air conditioner, and the user feels moderate coolness while the humidity at seating surface 26E decreases, with the power consumption decreasing.

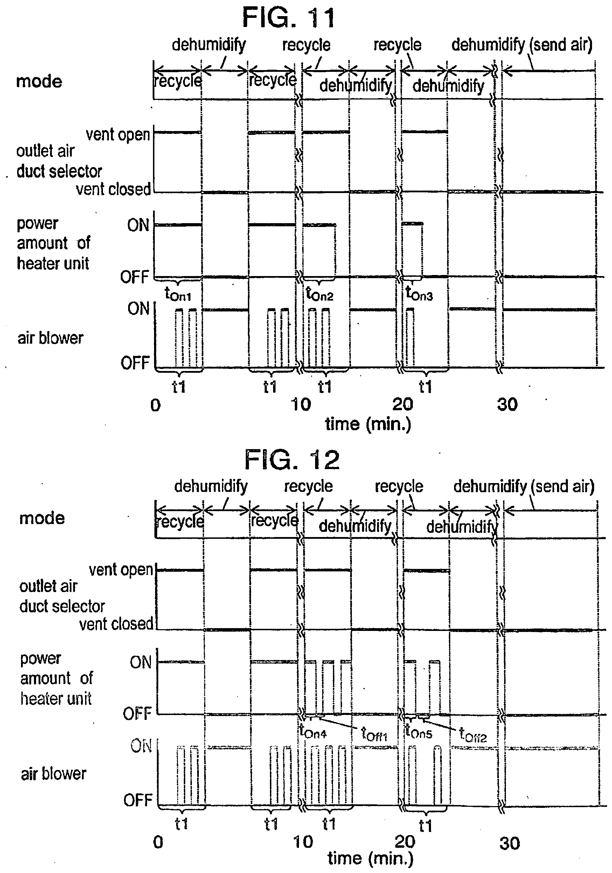

Here, only the energization time for heater unit 32 may be changed while the recycle-mode time remains constant (that is a third control action). Fig. 11 is a time chart for actions in each mode.

In this control action, control unit 54 controls the energization time for heater unit 32 in a recycle mode so that it is long immediately after starting operation. In the above-mentioned makeup, the in-cabin condition is assumed to be approximately 50°C, 25%RH in summer. Control unit 54 first performs a recycle-mode operation for "t1" (e.g. 30 seconds). Specifically, control unit 54 controls selector 35 to a position to open vent 33, and drives heater unit 32 for "ton1" (e.g. 30 seconds). Simultaneously, after stopping air blower 14 for a first 10 seconds, air blower 14 is driven intermittently at a flow rate of 0.3 m³ per minute.

When the car air-conditioner is driven, the in-cabin temperature and humidity gradually drop to 35°C, 50%RH in 10 minutes, and to 25°C, 50%RH in 30 minutes. Accordingly, control unit 54 performs a recycle-mode operation for "t1" even after 10 minutes or later after starting operation. At this moment, heater unit 32 is driven for "ton2" (e.g. 20 seconds), shorter than "ton1", and air blower 14 is intermittently driven first. After 20 minutes or later, a recycle-mode operation is still performed for "t"1, however, heater unit 32 is driven for "ton3" (e.g. 10 seconds), further shorter, and air blower 14 is intermittently driven first. In a steady state after 30 minutes or later, the recycle-mode time may be controlled to 0, namely continuous dehumidification (sending air) may be performed. Even if such operation is performed, the temperature and humidity of the air blown out from outlets 26A are suppressed to a low level by the air conditioner, and the user feels moderate coolness while the humidity at seating surface 26E decreases, with the power consumption decreasing

Here, control unit 54 may control each component as shown in Fig. 12 (that is a fourth control action). That is, the energization of heater unit 32 during "t1" (e.g. 30 seconds) in a recycle-mode operation is to set as continuous energization during a recycle-mode operation just after starting operation. After 10 minutes or later, intermittent energization is performed, where energized for "ton4" (e.g. 8 seconds) and stopped for "toff1" (e.g. 2 seconds). After 20 minutes or later, intermittent energization is performed, where energized for "ton5" (e.g. 8 seconds) and stopped for "toff2" (e.g. 5 seconds). In a steady state after 30 minutes or later, the recycle-mode time is controlled to 0, namely continuous dehumidification (sending air) is performed. In such a manner, the same advantage is available with a control action that sequentially decreases the energization time in intermittent energization.

If multiple conditioning units 12B are provided as shown in Fig. 7, it is not preferable that heater units 31 of respective conditioning units 12B are energized simultaneously. Next, a description is made for such an operation control action.

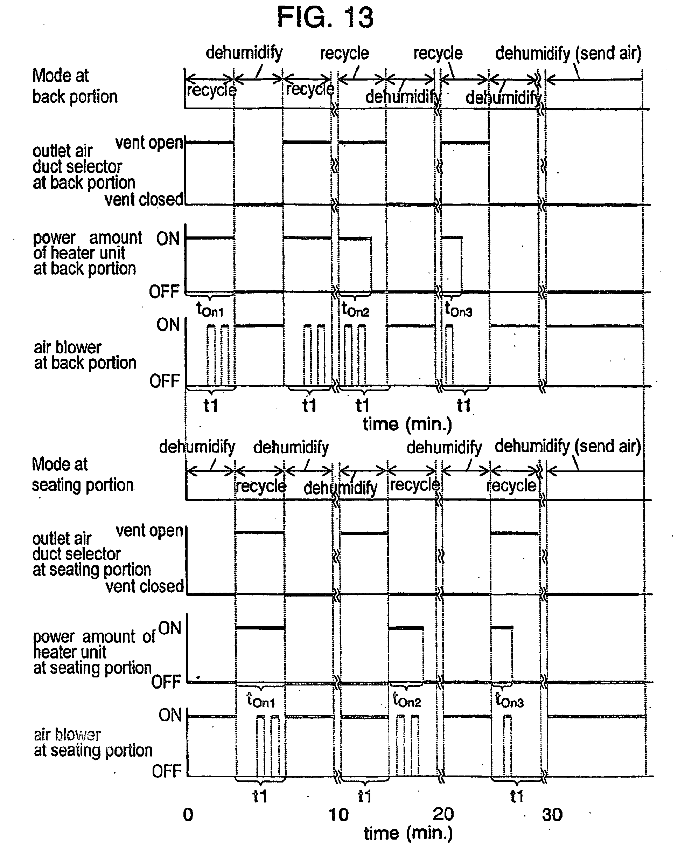

Fig. 13 is a time chart for actions in each mode. In this fifth control action, control unit 54 stops heater unit 32 at seating portion 51 during energization of heater unit 32 at back portion 52, namely a second heater unit. Heater unit 32 at back portion 52 heats dehumidifier 32 at back portion 52, namely a second dehumidifier. Dehumidifier 32 at back portion 52 dehumidifies air sent by air blower 14 at back portion 5, which is a second air blower. Air blower 14 at back portion 52 takes in air from the outside to pass it through duct 13 at back portion 52, which is a second duct different from duct 13at is a sir seating portion 51.

In other words, conditioning unit 12B at back portion 52 performs a recycle-mode operation first, while conditioning unit 12B at seating portion 51 performs a dehumidify-mode operation first. With such a control operation, multiple heater units 32 are not activated simultaneously, thus suppressing a maximum current for recycling to be low.

In the control action shown in Fig. 13, control unit 54 controls conditioning unit 12B at back portion 52 and conditioning unit 12B at seating portion 51so that they perform recycle- and dehumidify-mode operations, respectively and inversely. Otherwise, the same advantage is available when control unit 54 controls so that each mode operation is performed simultaneously at seating portion 51 and back portion 52, and heater units 32 at seating portion 51 and back portion 52 are not energized simultaneously.

Further, the following makeup can be adopted. That is, if conditioning units 12B are respectively provided for the driver's seat and passenger's seat, and a control unit for controlling conditioning units 12B for both seats is provided, the control unit, during energization of heater unit 32 of one of conditioning units 12B, stops the other heater unit 32 or limits the energizing amount. In other words, when multiple seats are provided with conditioning units 12B respectively, the control unit, during energization of at least one heater unit 32, stops at least one of heater units 32 other than energized one or limits the energizing amount. With such a control operation, power consumption by the air conditioned seat device is reduced in the entire vehicle.

Next, a description is made for the makeup in which various kinds of sensors are further provided in the makeup shown in Fig. 7, and output from the sensors is fed into control unit 54 to control conditioning unit 12B and air blower 14. First, a description is made for the case where dry air temperature sensor (sensor, hereinafter) 55 is provided that senses temperature of the air dehumidified by conditioning unit 12B.

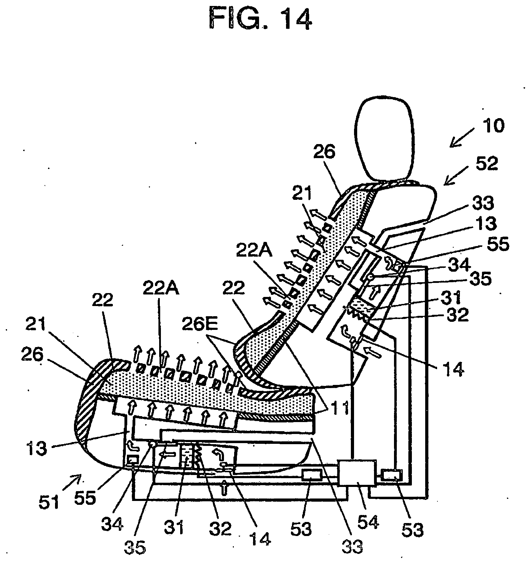

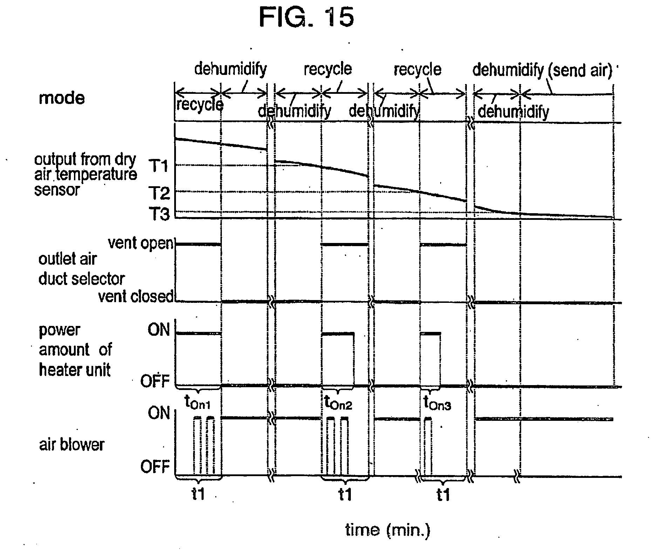

Fig. 14 is a sectional view of another air conditioned seat device according to the present embodiment. Fig. 15 is a time chart for actions in each mode of the air conditioned seat device shown in Fig. 14. Sensor 55 made of a thermistor or the like is provided downstream of conditioning unit 12B. Control unit 54 accepts output from sensor 55 to control the energizing amount for heater unit 32 according to the output.

In the above-mentioned makeup, the in-cabin condition is assumed to be approximately 50°C, 25%RH in summer. As shown in Fig. 15, control unit 54 first performs a recycle-mode operation in the same way as in the control action in Fig. 9, and after the recycle-mode operation completes, performs a dehumidify-mode operation for 30 seconds.

When the car air-conditioner is driven, the in-cabin temperature and humidity gradually drop. Accordingly, control unit 54 performs a recycle-mode operation for "t1" (e.g. 30 seconds) even if output from sensor 55 reaches "T1" (e.g. 40°C). At this moment, control unit 54 drives heater unit 32 for "ton2" (e.g. 20 seconds), shorter than the first heating period of time "ton1". After time elapses, when output from sensor 55 reaches "T2" (e.g. 32°C), lower than "T1", control unit 54 drives heater unit 32 for "ton3" (e.g. 10 seconds), shorter than "ton2", in a recycle-mode operation. After more time elapses, when output from sensor 55 reaches "T3" (e.g. 25°C), lower that "T2", the recycle-mode time is controlled to 0, namely continuous dehumidification (sending air) is performed. That is, control unit 54 controls so as to restrict the energizing amount for heater unit 32 when output from sensor 55 is lower than a predetermined value. Even if such operation is performed, the temperature and humidity of the air blown out from the outlets by the air conditioner are suppressed to a low level, and the user feels moderate coolness while the humidity at seating surface 26E decreases, with the power consumption decreasing.

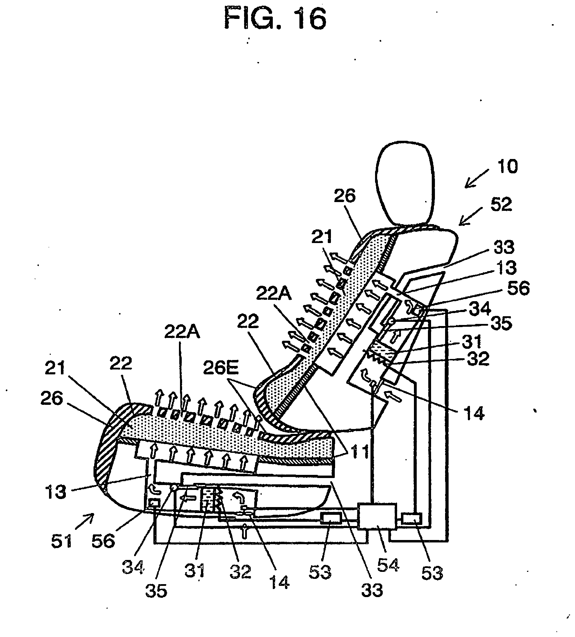

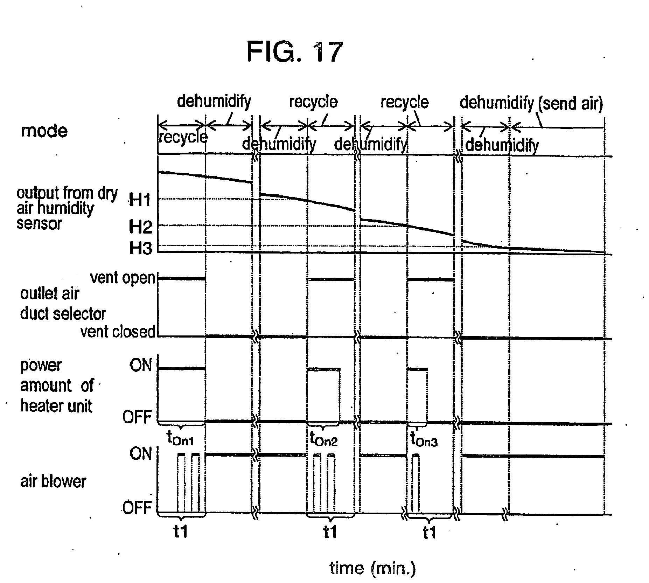

Next, a description is made for the case where dry air humidity sensor (sensor, hereinafter) 56 for sensing the humidity of air dehumidified by conditioning unit 12B is provided. Fig. 16 is a sectional view of still another air conditioned seat device according to the present embodiment. Fig. 17 is a time chart for actions in each mode of the air conditioned seat device shown in Fig. 16. Sensor 56, composed of a relative humidity sensor, an absolute humidity sensor, or the like, is provided downstream of conditioning unit 12B. Control unit 54 accepts output from sensor 56 to control the energizing amount for heater unit 32 according to the output.

In the above-mentioned makeup, the in-cabin condition is assumed to be approximately 50°C, 25%RH in summer. As shown in Fig. 17, control unit 54 first performs a recycle-mode operation in the same way as in the control action in Fig. 9, and after the recycle-mode operation completes, performs a dehumidify-mode operation for 30 seconds.

When the car air-conditioner is driven, the in-cabin temperature and humidity gradually drop. Accordingly, control unit 54 performs a recycle-mode operation for "t1" (e.g. 30 seconds) even if output from sensor 56 reaches "H1" (e.g. 21%RH). At this moment, control unit 54 drives heater unit 32 for "ton2" (e.g. 20 seconds), shorter than the first heating period of time "ton1". After time elapses; when output from sensor 56 reaches "H2" (e.g. 18%RH), lower than "H1", control unit 54 drives heater unit 32 for "ton3" (e.g. 10 seconds), shorter than "ton2", in a recycle-mode operation. After more time elapses, when output from sensor 56 reaches "H3" (e.g. 15%RH), lower than "H2", the recycle-mode time is controlled to 0, namely continuous dehumidification (sending air) is performed. That is, control unit 54 restricts the energizing amount for heater unit 32 when output from sensor 56 is lower than a predetermined value. Even if such operation is performed, the temperature and humidity of the air blown out from the outlets are suppressed to a low level by the air conditioner, and the user feels moderate coolness while the humidity at seating surface 26E decreases, with the power consumption decreasing.

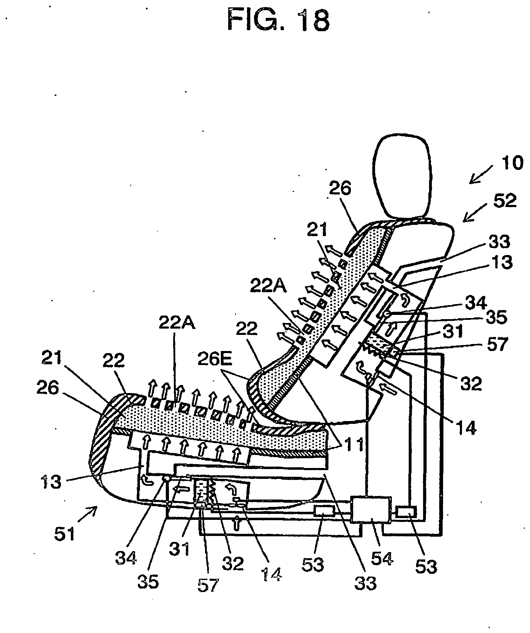

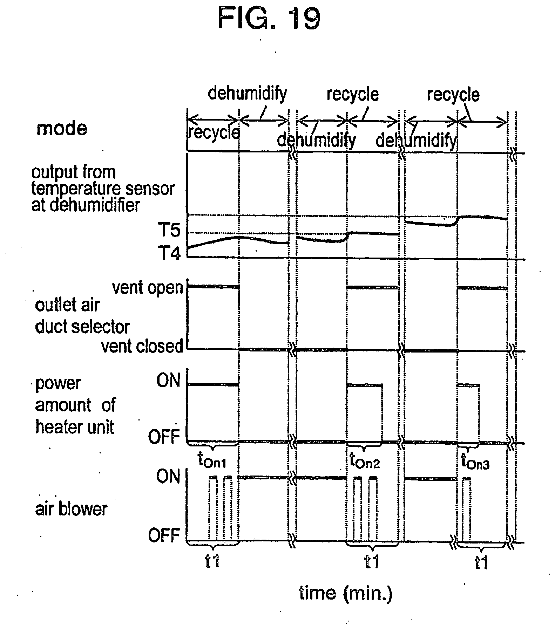

Next, a description is made for the case where temperature sensor (sensor, hereinafter) 57 for sensing the temperature at dehumidifier 31 is provided. Fig. 18 is a sectional view of still another air conditioned seat device according to the present embodiment. Fig. 19 is a time chart for actions in each mode of the air conditioned seat device shown in Fig. 18. Sensor 57, made of a thermistor or the like, is provided in a casing around dehumidifier 31. Control unit 54 accepts output from sensor 57 to control the energizing amount for heater unit 32 according to the output.

In the above-mentioned makeup, the in-cabin condition is assumed to be approximately 50°C, 25%RH in summer. As shown in Fig. 19, control unit 54 first performs a recycle-mode operation in the same way as in the control action in Fig. 9, and after the recycle-mode operation completes, performs a dehumidify-mode operation for 30 seconds.

When the car air-conditioner is driven, the in-cabin temperature and humidity gradually drop. Accordingly, the humidity of the in-cabin air drops, vapor desorbed with recycling decreases even if dehumidifier 31 is heated by heater unit 32, and thus the temperature at dehumidifier 31 rises. Here, control unit 54 performs a recycle-mode operation for "t1" (e.g. 30 seconds) even if output from sensor 57 reaches "T4" (e.g. 60°C). At this moment, control unit 54 drives heater unit 32 for "ton2" (e.g. 20 seconds), shorter than the first heating period of time "ton1". After time elapses, when output from sensor 57 reaches "T5" (e.g. 30°C), higher than "T4", control unit 54 drives heater unit 32 for "ton3" (e.g. 10 seconds), shorter than "ton2", in a recycle-mode operation. That is, control unit 54 restricts the energizing amount for heater unit 32 when output from sensor 57 is higher than a predetermined value. Even if such operation is performed, the temperature and humidity of the air blown out from the outlets are suppressed to a low level by the air conditioner, and the user feels moderate coolness while the humidity at seating surface 26E decreases, with the power consumption decreasing.

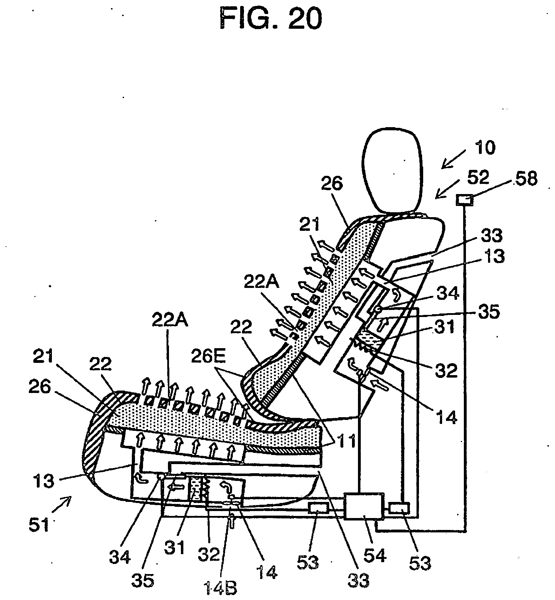

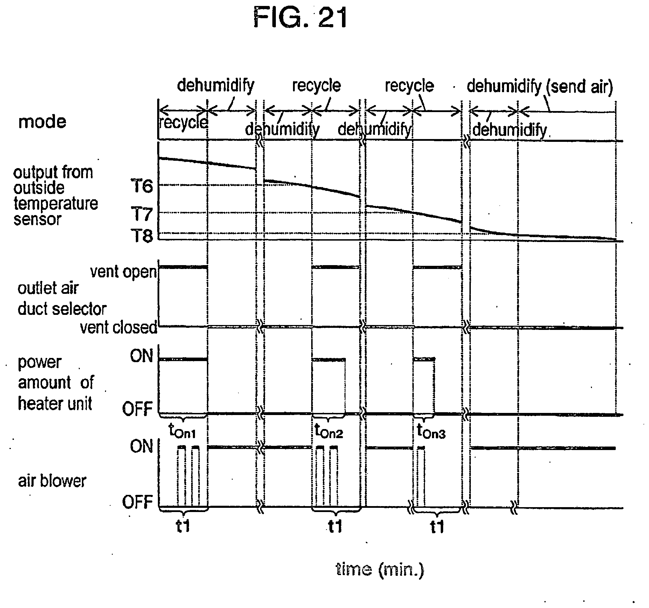

Next, a description is made for the case where outside temperature sensor (sensor, hereinafter) 58 is provide for sensing the temperature of air outside air conditioned seat device 10, such as in the cabin. Fig. 20 is a sectional view of still another air conditioned seat device according to the present embodiment. Fig. 21 is a time chart for actions in each mode of the air conditioned seat device shown in Fig. 20 Sensor 58, made of a thermistor or the like, is provided outside in-cabin air conditioned seat device 10, at a location hardly affected by the temperature at conditioning unit 12B, such as the vicinity of air inlet 14B of air blower 14. Control unit 54 accepts output from sensor 58 to control the energizing amount for heater unit 32 according to the output.

In the above-mentioned makeup, the in-cabin condition is assumed to be approximately 50°C, 25%RH in summer. As shown in Fig. 21, control unit 54 first performs a recycle-mode operation in the same way as in the control action in Fig. 9, and after the recycle-mode operation completes, performs a dehumidify-mode operation for 30 seconds.

When the car air-conditioner is driven, the in-cabin temperature and humidity gradually drop. Here, control unit 54 performs a recycle-mode operation for "t1" (e.g. 30 seconds) even if output from sensor 58 reaches "T6" (e.g. 35°C). At this moment, control unit 54 drives heater unit 32 for "ton2" (e.g. 20 seconds), shorter than the first heating period of time "ton1". After time elapses, when output from sensor 58 reaches "T7" (e.g. 27°C), lower than "T6", control unit 54 drives heater unit 32 for "ton3" (e.g. 10 seconds), shorter than "ton2", in a recycle-mode operation. After more time elapses, when output from sensor 58 reaches "T8" (e.g. 25°C), lower than "T7", the recycle-mode time is controlled to 0, namely continuous dehumidification (sending air) is performed. That is, control unit 54 restricts the energizing amount for heater unit 32 when output from sensor 58 is lower than a predetermined value. Even if such operation is performed, the temperature and humidity of the air blown out from the outlets are suppressed to a low level by the air conditioner, and the user feels moderate coolness while the humidity at seating surface 26E decreases, with the power consumption decreasing.

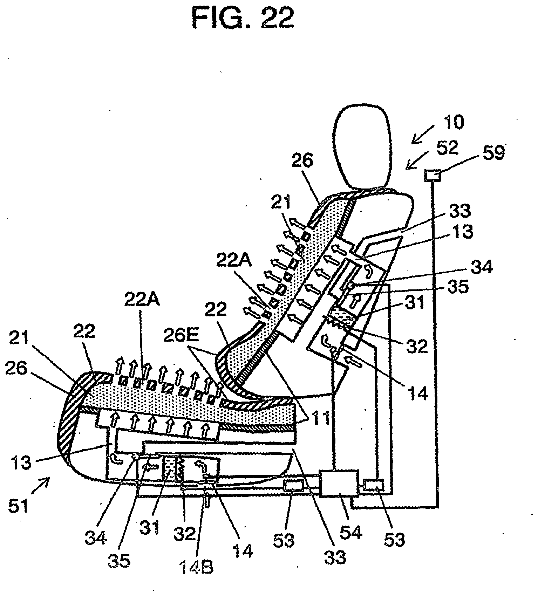

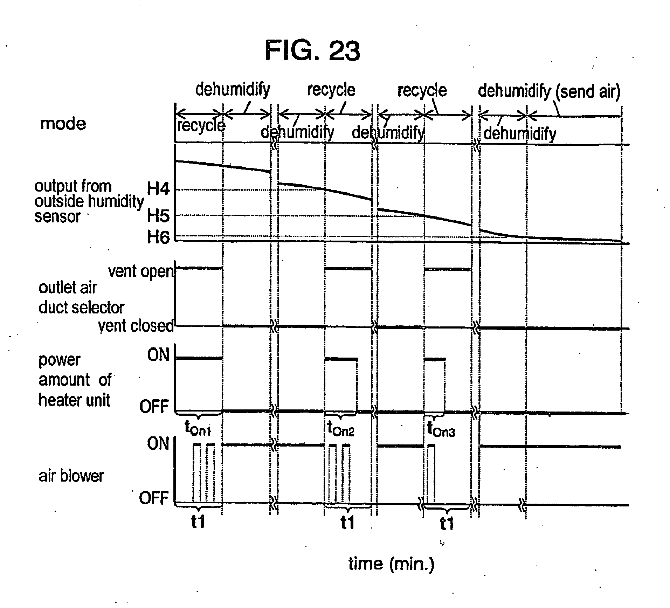

Next, a description is made for the case where external temperature and humidity unit (sensor, hereinafter) 59 is provided for sensing the humidity of air outside air conditioned seat device 10, such as in the cabin. Fig. 22 is a sectional view of still another air conditioned seat device according to the present embodiment. Fig. 23 is a time chart for actions in each mode of the air conditioned seat device shown in Fig. 22. Sensor 59, composed of a relative humidity sensor, an absolute humidity sensor, or the like, is provided outside in-cabin air conditioned seat device 10, at a location hardly affected in humidity by conditioning unit 12B, such as the vicinity of air inlet 14B of air blower 14. Control unit 54 accepts output from sensor 59 to control the energizing amount for heater unit 32 according to the output.

In the above-mentioned makeup, the in-cabin condition is assumed to be approximately 50°C, 25%RH in summer. As shown in Fig. 23, control unit 54 first performs a recycle-mode operation in the same way as in the control action in Fig. 9, and after the recycle-mode operation completes, performs a dehumidify-mode operation for 30 seconds.

When the car air-conditioner is driven, the in-cabin temperature and humidity gradually drop. Here, control unit 54 performs a recycle-mode operation for "t1" (e.g. 30 seconds) even if output from sensor 59 reaches "H4" (e.g. 21%RH). At this moment, control unit 54 drives heater unit 32 for "ton2" (e.g. 20 seconds), shorter than the first heating period of time "ton1", in a recycle mode. After time elapses, when output from sensor 59 reaches "H5" (e.g. 18%RH); lower than "H4", control unit 54 drives heater unit 32 for "ton3" (e.g. 10 seconds), shorter than "ton2", in a recycle-mode operation. After more time elapses, when output from sensor 59 reaches "H6" (e.g. 15%RH), lower than "H5", control unit 54 sets the recycle-mode time to 0, namely continuous dehumidification (sending air) is performed. That is, control unit 54 restricts the energizing amount for heater unit 32 when output from sensor 59 is lower than a predetermined value. Even if such operation is performed, the temperature and humidity of the air blown out from the outlets are suppressed to a low level by the air conditioner, and the user feels moderate coolness while the humidity at seating surface 26E decreases, with the power consumption decreasing.

### FOURTH EXEMPLARY EMBODIMENT

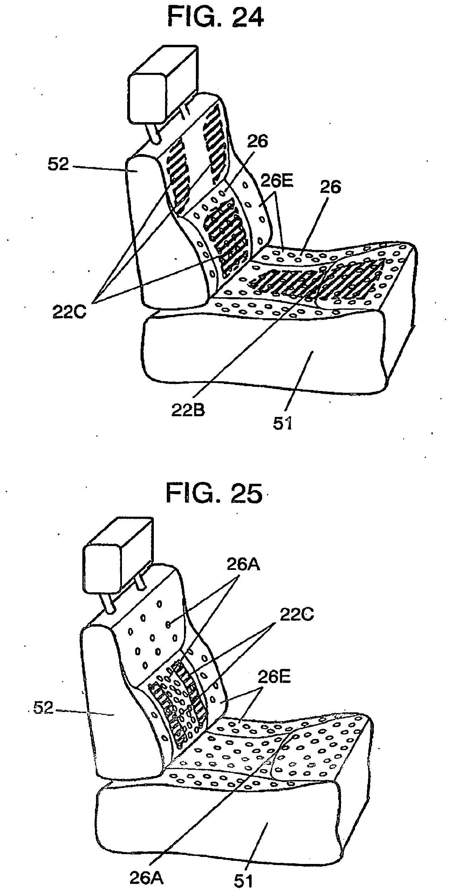

Fig. 24 is a perspective view of an air conditioned seat device according to the fourth exemplary embodiment of the present invention. In the present embodiment, the disposition pattern of PTC heater 22B provided at seating portion 51 differs from that of PTC heater 22C provided at back portion 52. More specifically, as shown in Fig. 24, PTC heater 22B is provided so as to be expanded at the femur of a human body while being seated, and PTC heater 22C at back portion 52 is provided at a part where PTC heater 22C contacts the back and shoulders. The makeup otherwise is the same as one of the first to third exemplary embodiments.

In this makeup, PTC heater 22B is arranged so as to contact parts with thin subcutaneous fat, such as the femur, having more sensitivity to warmth than a part with thick subcutaneous fat, such as buttocks. Consequently, the user feels a sense of warmth effectively. PTC heater 22C is provided at a position where contacting the back and the shoulders, to heat only parts that the human body contacts while being seated, thus giving a sense of warmth effectively as well. By arranging PTC heaters 22B, 22C so as to give a sense of warmth effectively in this way, heating is available with a small amount of energy and additionally with a short rising time.

In the present embodiment, the example is illustrated where PTC heater 22B is provided at one position, and PTC heaters 22C are provided at three positions, but not limited to this arrangement. It would be adequate as long as PTC heaters 22B, 22C at seating portion 51 and back portion 52 are differently arranged respectively, and are provided directly beneath skin 26 effectively.

### FIFTH EXEMPLARY EMBODIMENT

Fig. 25 is a perspective view of an air conditioned seat device according to the fifth exemplary embodiment of the present invention. In the present embodiment, the disposition pattern of outlets 26A at seating portion 51 differs from that at back portion 52. More specifically, as shown in Fig. 25, outlets 26A are provided in high density at the central part of back portion 52, and PTC heater 22C is provided at its both sides.

With this makeup, a large amount of dry air is blown out from outlets 26A provided at the central part of back portion 52, goes through clothes to reach the back, and is supplied to the upper back promptly along the recess on the human body surface, along the backbone. Consequently, the user rapidly feels coolness over the wide range of the back. In this way, even if the volume of the supplied dry air is small, coolness is effectively provided to the human body, to enable downsizing of the device. Further; a small volume of air provides coolness to reduce the operation noise of the device

In the present embodiment, a large number of outlets 26A are provided at the central part of back portion 52, but not necessarily limited to this arrangement. It would be adequate as long as outlets 26A are effectively provided with the disposition pattern of outlets 26A at back portion 52 different from that at seating portion 51.

### SIXTH EXEMPLARY EMBODIMENT

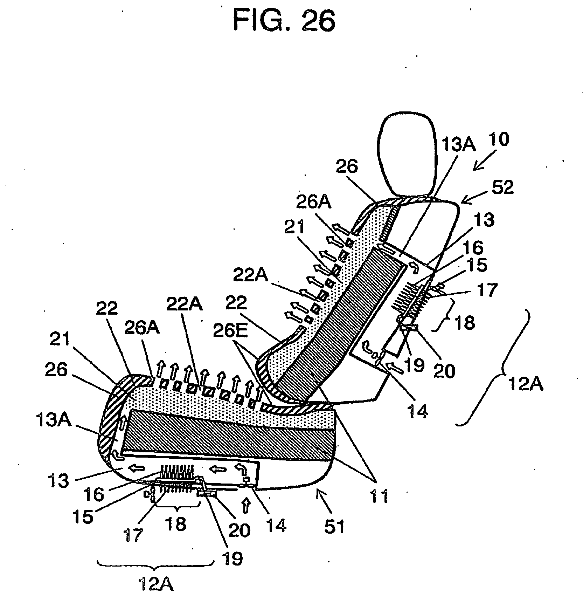

Fig. 26 is a sectional view of an air conditioned seat device according to the sixth exemplary embodiment of the present invention. The side of support member 11 is provided thereon with vent groove (groove, hereinafter) 13A communicating with the seating surface 26E side. Support member 11 is made of an air-impermeable and elastic body such as urethane foam. The degree of elasticity is the same as that in the first exemplary embodiment. Air sent from air blower 14 through duct 13 is farther sent to member 21 through groove 13A, diffuses in an air layer, and blown out from outlets 26A through opening 22A of PTC heater 22. That is, duct 13 communicates with groove 13A. The makeup otherwise is the same as that in the first exemplary embodiment. '

In this makeup, groove 13A is provided in a manner that it communicates with seating surface 26E from the side of support member 11. Consequently, air is conducted at a position free from a load of the human body, with low pressure loss in sending air, resulting in sending air to the end without depressing the air volume performance. In addition, a through-hole or a void into which member 21 sinks is not provided at a position where a load of seating surface 26E is applied, thus seating comfort is kept.

Meanwhile, conditioning unit 12A is not essential in the same way as in the first exemplary embodiment. Air can be sent over the entire position where the human body contacts seating surface 26E except by forming an air layer using member 21. Such configurations are described hereinafter.

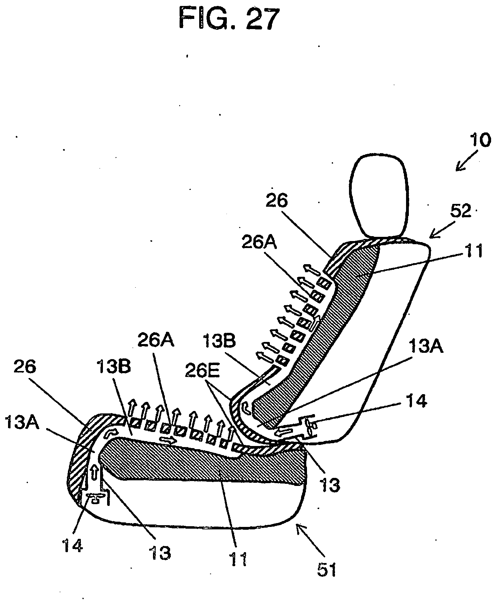

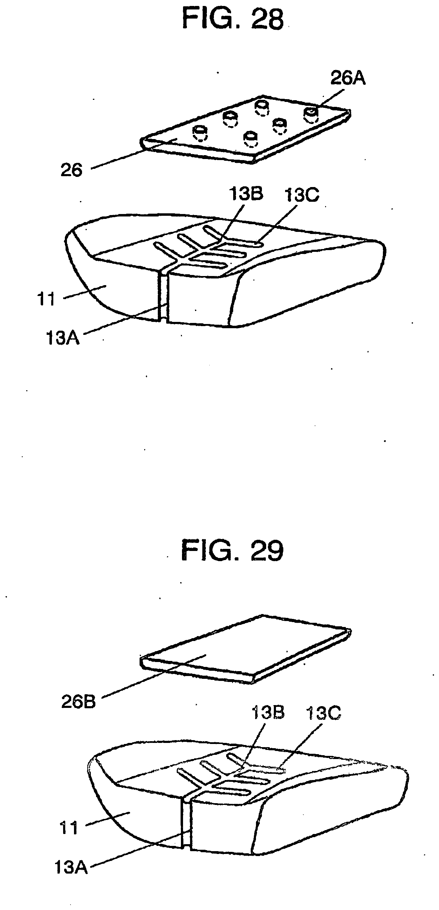

Fig. 27 is a sectional view of another air conditioned seat device according to the sixth exemplary embodiment of the present invention. Fig. 28 is a perspective view illustrating a support member and a skin in the air conditioned seat device shown in Fig. 27.

In this makeup, vent groove (groove, hereinafter) 13B is provided at the seating surface 26E side of support member 11, which is an elastic body such as urethane foam. Further, vent groove (groove, hereinafter) 13C is provided so that it communicates with groove 13B and branches while spreading on seating surface 26E. Skin 26 covers support member 11 without member 21 forming an air layer being provided. Skin 26 is provided therein with outlets 26A, and air sent from air blower 14 spreads at groove 13C and is sprayed on the human body from the entire surface of skin 26. PTC heater 22, conditioning unit 12A, or conditioning unit 12B may be provided although they are not in Fig. 27.

Hereinafter, a description is made for the actions and effects of the air conditioned seat device with the above-mentioned makeup. When air blower 14 is driven, the in-cabin air is sent into groove 13A at a flow rate of 0.2 m³ per minute, for example. Then the air is sent to seating surface 26E to be sprayed on the surface of the seated human body from outlets 26A provided on skin 26. Consequently, the human body feels coolness. When the room temperature drops by means of an air conditioning device such as a car air-conditioner or room air-conditioner, coolness further increases.

In the present embodiment, groove 13A is provided in a manner that it communicates with seating surface 26E from the side of support member 11 so that it distributes air to groove 13B on seating surface 26E as mentioned above. Consequently, air is conducted at a position free from a load of the human body, with low pressure loss in sending air, resulting in sending air to the end without depressing the air volume performance. In addition, a through-hole is not provided in seating surface 26E, thus seating comfort is kept. Air is conducted at a position free from a load of the human body, namely at the side of support member 11, to implement low pressure loss, resulting in downsizing of air blower 14. In addition, the simple makeup with groove 13A provided on the side of support member 11 improves yields in molding for manufacturing.

Meanwhile, providing groove 13C that is formed by branching groove 13B at seating surface 26E enables air to be sent to the entire area where the human body contacts seating surface 26E, and thus the human body immediately feels coolness.

Further, as shown in Fig. 28, outlets 26A are preferably provided at a position where a human body has a large number of cold spots, at least a part of air-impermeable skin 26 provided on the top surface of support member 11. In this makeup, the air sent from air blower 14 is intensively sprayed from outlets 26A on a position with a large number of cold spots, and thus strong coolness is available. Whatever material, including air-impermeable one, can be used for skin 26, and thus selection can be made from materials suitable for seating

Here, skin 26 may use other material. Fig. 29 is a perspective view illustrating another skin of the air conditioned seat device shown in Fig. 27. Skin 26B, surface material of the seat, is air-permeable and provided on the top surface of support member 11.

By providing air-permeable skin 26B on the top surface of support member 11, vent grooves 13B, 13C are covered with skin 26B even if a human body seats on vent groove 13A in seating surface 26E. Consequently, skin 26B disperses a load of the human body and smoothes asperities such as grooves 13B, 13C to improve seating comfort. Further, the air diffusing at skin 26B is sent to parts except those directly above vent grooves 13A, 13B, 13C, thus increasing coolness.

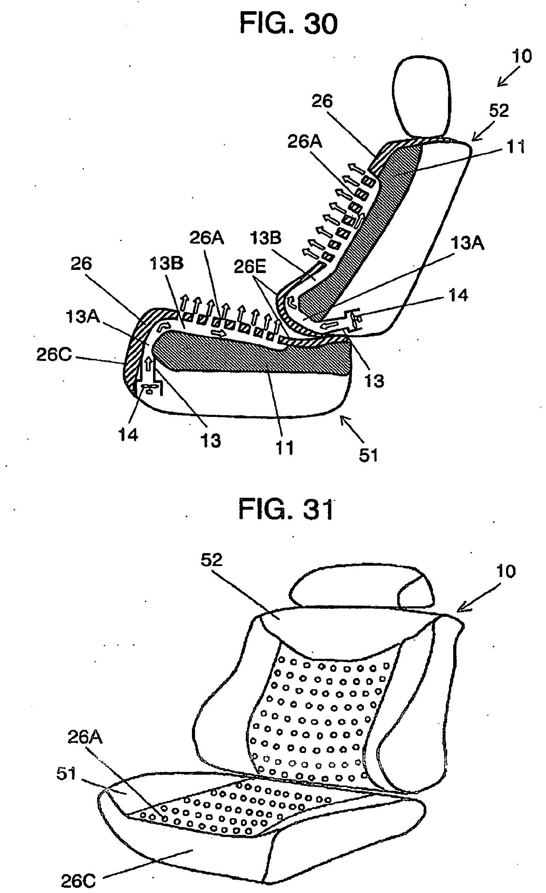

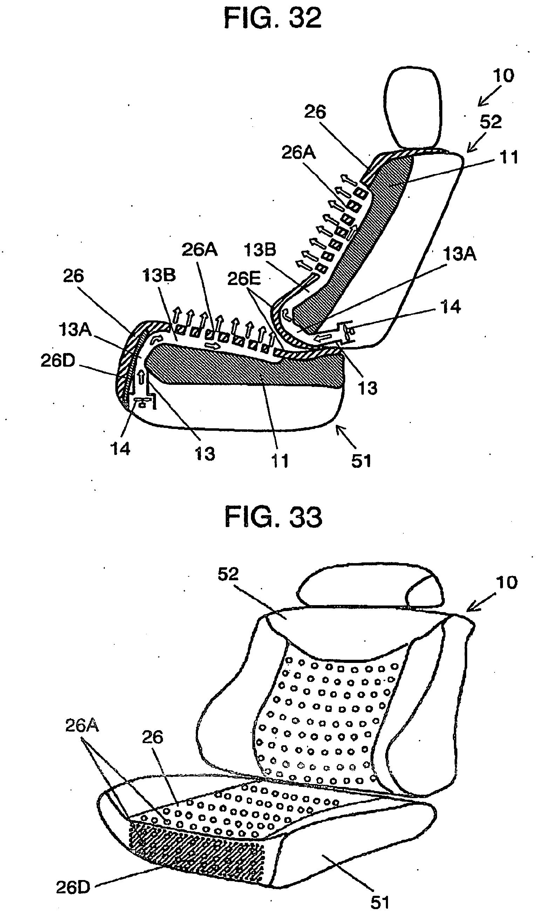

Next, makeup for making the function of groove 13A more effective is described. Fig. 30 is a sectional view of another air conditioned seat device according to the present embodiment. Fig. 31 is a perspective view of the air conditioned seat device shown in Fig. 30. Fig. 32 is a sectional view of still another air conditioned seat device according to the present embodiment. Fig. 33 is a perspective view of the air conditioned seat device shown in Fig. 32.

In the makeup shown in Figs. 30, 31, skin 26C provided at a part covering at least a part of at least groove 13A is air-impermeable. The makeup otherwise is the same as that in Fig. 27. That is, a part covering at least a part of at least groove 13A is air-impermeable

Seating surface 26E is provided therein with a large number of outlets 26A to blow out air from skin 26, and its side is provided thereon with air-impermeable skin 26C without outlets being provided. With this makeup, air passing through the inside of groove 13A is led to seating surface 26E without leaking from the side with skin 26C provided, and is blown out from outlets 26A in seating surface 26E, to give coolness to a human body. Additionally, air-impermeable skin 26C allows air to be blown out to only a required area, which enables downsizing of the device while maintaining required performance.

As in Figs. 32, 33, the same advantage is available with the makeup in which at least a part of groove 13A provided on skin 26 with outlets 26A provided on its entire surface including its side, and the side of support member 11 is covered with air-impermeable surface material 26D.

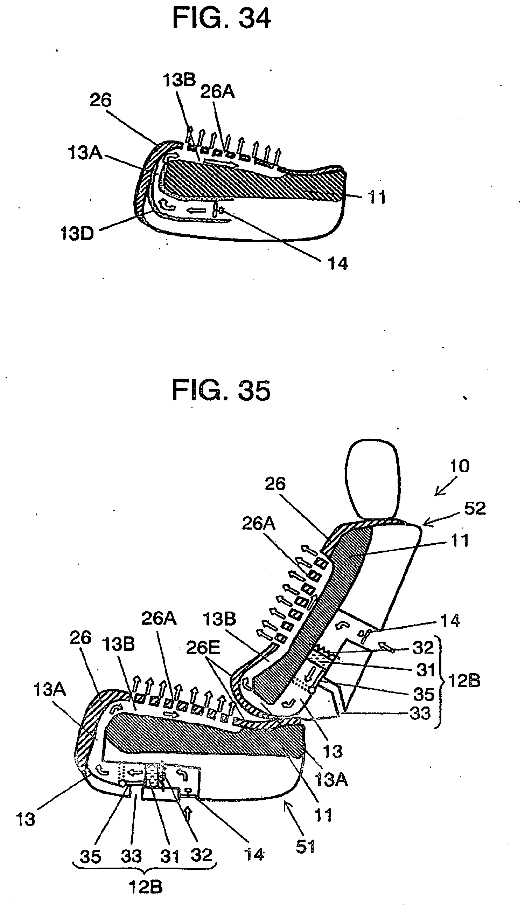

Next, a description is made for more preferable makeup of the airflow path. Fig. 34 is a sectional view of the seating portion of still another air conditioned seat device according to the present embodiment. Air duct 13D made of elastic material penetrates groove 13A. The makeup otherwise is the same as that in Fig. 27.

In this makeup, duct 13D is made of material with an elastic modulus smaller than that of support member 11 and enough flexibility so as not to give uncomfortable feeling when a human body is seated, and thus is not hard unlike a duct made of resin or metal. Consequently, when duct 13D is disposed on the side, which is covered with skin 26 and can be contacted by the user, duct 13D with elasticity and flexibility like support member 11 does not give uncomfortable feeling if contacted. Duct 13D arranged on the side does not need to bear the weight of a human body, and thus can use material with a low elastic modulus. Even if a constructional element such as a driving mechanism for a power seat is arranged at the bottom of seating portion 51, the makeup is suitable for duct 13D to be routed to seating surface 26E. That is, the installation location for air blower 14 and the like become flexible. Further, duct 13D made of elastic material absorbs the vibration of air blower 14 as well. Here, Fig. 34 illustrates the state where duct 13D is applied to the makeup shown in Fig. 27, but may be applied to that in Fig. 26.

Fig. 35 is a sectional view of still another air conditioned seat device according to the sixth exemplary embodiment of the present invention. In this way, conditioning unit 12B including dehumidifier 31 having a dehumidification agent may be provided in the makeup shown in Fig. 27 in the same way as that in the third exemplary embodiment.

More specifically, in a dehumidify mode, selector 35 is set to a position where vent 33 is closed and air blower 14 is driven. Air blower 14 sends in-cabin air (e.g. 35°C, 55%RH) to dehumidifier 31 at a flow rate of 0.2 m³ per minute, for example. Dehumidifier 31 adsorbs moisture in this air, and the air decreases in its humidity while heated with its adsorption heat, resulting in a high temperature and low humidity (48°C, 18%RH). Then, this air is led to duct 13A, sent to seating surface 26E, and sprayed on the surface of a seated human body from outlets 26A provided in skin 26.

Meanwhile, in a recycle-mode, selector 31 is positioned so that vent 33 opens and heater unit 32, that is an electrical resistance heating element, is activated. For example, if an adsorbent used in dehumidifier 31 is silica gel, heater unit 32 heats to 130°C to cause vapor to be emitted from the adsorbent. Then the highly humid air is emitted from vent 33 to the outside of air conditioned seat device 10, such as the inside of the cabin.

Here, adsorbent 25 can be recycled most efficiently if the motor of air blower 14 is a direct-current motor, and the number of rotations is controlled so that air blower 14 blows feeble wind with a blow volume of approximately 0.02 m³ per minutes.

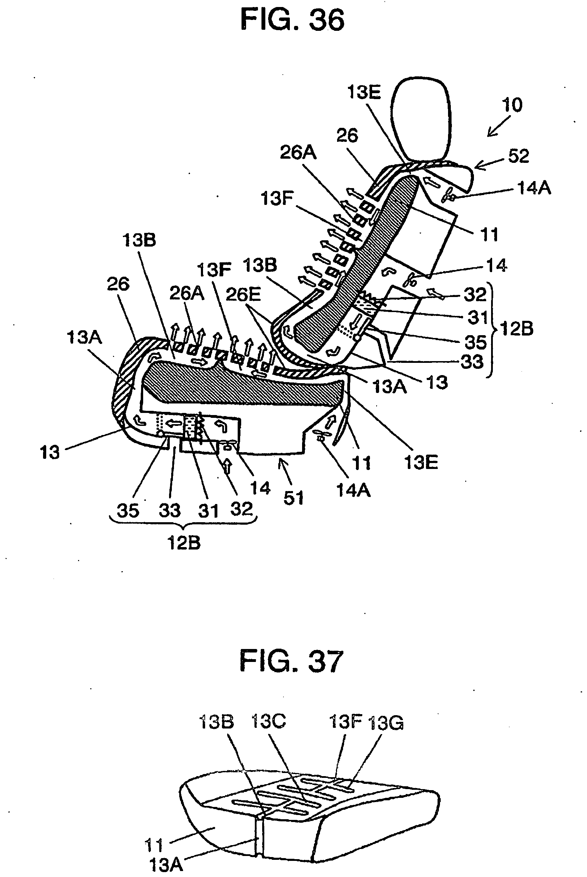

Next, a description is made for a vent groove with another makeup provided in support member 11. Fig. 36 is a sectional view of still another air conditioned seat device according to the present embodiment. Fig. 37 is a perspective view illustrating a support member in the air conditioned seat device shown in Fig. 36.

In this makeup, multiple vent grooves (groove, hereinafter) 13A, 13E are provided so that they communicate with seating surface 26E from the side. Air blower 14 sends the air dehumidified by conditioning unit 12B to groove 13A, and air blower 14A sends the air taken in from parts other than seating surface 26E of air conditioned seat device 10 to groove 13E directly. Consequently, the air sent to groove 13A is transferred to groove 13B on the seat surface and distributed on the surface owing to groove 13C. On the other hand, the in-cabin air sucked by air blower 14A is sent to seating surface 26E through groove 13E, and vent grooves 13F, 13G. In this makeup, as grooves 13A, 13E are independently provided, the air flows are not mixed before spraying on a human body, the humidity of the dehumidified air from is prevented from decreasing, and the temperature of the cooled air is prevented from increasing, thus depression in coolness is avoided.

Hereinafter, a description is made for the actions and effects of the air conditioned seat device with the above-mentioned makeup. Air blower 14 sends the air dehumidified by conditioning unit 12B to groove 13A and to groove 13C on seating surface 26E through groove 13B, and then sprays the dehumidified air on a human body to give coolness. Air blower 14A sends air to grooves 13F, 13G on seating surface 26E through groove 13E and sprays the air on a human body to give coolness. With this makeup, dehumidified air is intensively sprayed on a position with a large number of cold spots on a human body, and thus an uncomfortable state in summer is immediately changed to a comfortable one.

Contrarily to this makeup, dehumidified air may be sent to groove 13E and in-cabin air may be sent to groove 13A.

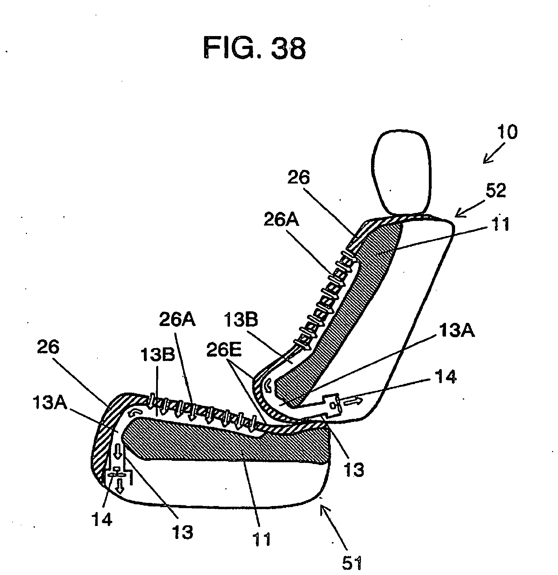

Fig. 38 is a sectional view illustrating still another example of the air conditioned seat device. In the above-mentioned makeup, air blower 14 blows out air from outlets 26A in skin 26, but air blower 14 may be activated so as to take in air from skin 26 as shown in Fig. 38. In this case, by taking in air, moisture such as sweat of a human body can be released to the outside of the main body of the air conditioned seat device. This activation does not give a sense of airflow due to the blowing out to the human body.

### SEVENTH EXEMPLARY EMBODIMENT

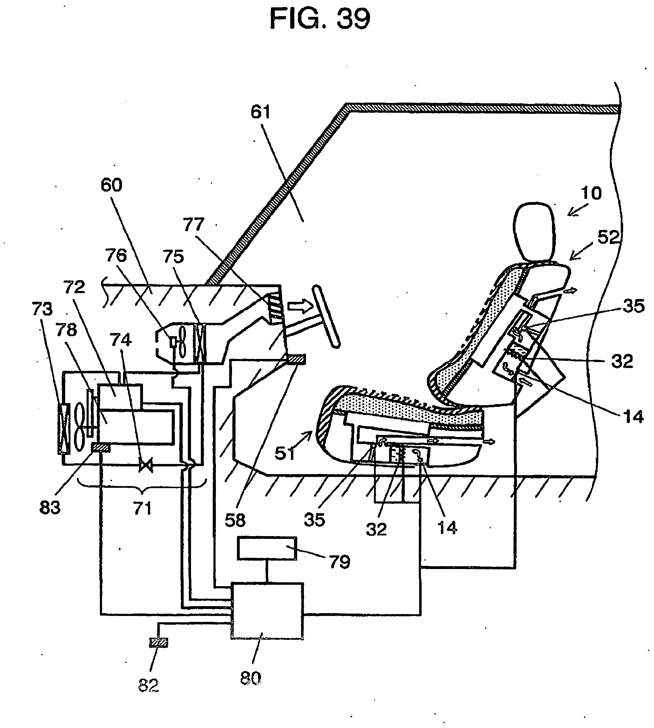

Fig. 39 is a block diagram of an air conditioning system according to the seventh exemplary embodiment of the present invention. The automobile is provided with vehicle air conditioner 71 of refrigeration cycle type. Vehicle air conditioner 71 is an external air conditioning device for air-conditioning the inside of cabin 61, that is a space where air conditioned seat device 10 is placed. Air conditioned seat device 10 provided in cabin 61 has the same basic makeup as that in Fig. 7 shown in the third exemplary embodiment. Two air conditioned seat devices 10 are placed next to each other on the floor of cabin 61, a certain limited space in automobile 60, for example

Vehicle air conditioner 71 made of a refrigeration unit with refrigeration cycle method is composed of compressor 72, condenser 73, decompressor 74, and vaporizer 75, each circularly connected with piping so that the refrigerant circulates. Vehicle air conditioner 71 heat-exchanges the air sucked by cabin air blower (air blower, hereinafter) 76, which is a third air blower with variable blow capacity, with vaporizer 75, to blow out cool conditioned air into cabin 61 from outlets 77 that is open to the front of the driver's seat. Compressor 72 rotates with engine 78 as its drive source.

Operation setting unit 79 directs operation for both air conditioned seat device 10 and vehicle air conditioner 71. Operation setting unit 79 includes operation buttons (not illustrated) for directing run and stop of air conditioned seat device 10 and vehicle air conditioner 71, respectively; operation performance setting buttons (not illustrated) for setting the blow volume and performance of respective devices; and a temperature setting button (not illustrated) for setting a target value of the operation performance for vehicle air conditioner 71.

Control unit 80 is composed of a microprocessor and its peripheral circuit, and electrically connected to air blower 14, heater unit 32, and selector 35; and to compressor 72 and air blower 76, respectively. Control unit 80 accepts directions from operation setting unit 79 and incorporates a program executing a sequence for controlling operation of air conditioned seat device 10 and vehicle air conditioner 71, according to the directions taken in. Control unit 80, when taking in the direction for turning on and off by the operation button on operation setting unit 79, runs and stops air conditioned seat device 10 simultaneously with vehicle air conditioner 71. At this moment, control unit 80 controls so as to increase the blow volume of air blower 14 when that of air blower 76 is large and vice versa. Above-mentioned air conditioned seat device 10, vehicle air conditioner 71, and control unit 80 compose the air conditioning system.

Hereinafter, a description is made for the actions and effects of this air conditioning system. Generally, when an automobile is parked in the summer scorching heat, the temperature in cabin 61 rises to 35°C or higher and that of skin 26 reaches approximately 60°C. When the driver riding in the automobile starts engine 78, turns on the operation button of operation setting unit 79, and sets the operation performance setting button to the maximum, control unit 80 starts operation of air conditioned seat device 10 and vehicle air conditioner 71. Then, control unit 80 starts operation of air conditioned seat device 10 in a dehumidify mode as shown in Fig. 39. When the dehumidification performance of the dehumidification agent becomes saturated, control unit 80 runs air conditioned seat device 10 in a recycle mode. The description for these series of actions is omitted because they are described in the third exemplary embodiment.

On the other hand, vehicle air conditioner 71 has already started along with air conditioned seat device 10. In vehicle air conditioner 71, the refrigerant circulates among condenser 73, decompressor 74, vaporizer 75, and compressor 72, by means of compressor 72 while air conditioned seat device 10 directly performs dehumidified air-conditioning on a human body. Air blower 76 is operated at its maximum performance, and sends air to vaporizer 75. This air is efficiently heat-exchanged at vaporizer 75, gradually decreases its temperature to be cool air, and blows out from outlets 77 into cabin 61 to begin air-conditioning of the inside of cabin 61.

Vehicle air conditioner 71 with a long rising time in its air conditioning effect lowers the room temperature of cabin 61 to 25°C in approximately 15 to 30 minutes. When the room temperature drops, the user switches the operation performance setting button of vehicle air conditioner 71 from the maximum performance to minimum, resulting in the blow volume of air blower 76 decreasing. When the blow volume of air blower 76 decreases, control unit 80 reduces the blow capacity of air blower 14 regardless of the setting of the operation performance setting button of air conditioned seat device 10. Accordingly, when the temperature in cabin 61 is high, the blow volume is large, giving coolness to the human body; when the in-cabin temperature drops, the blow volume from air conditioned seat device 10 becomes small. Consequently, overcooling of the human body is prevented, and the noise of air blower 14 is not heard owing to that of air blower 76 all the way to the steady state from immediately after starting operation.

If vehicle air conditioner 71 is an automatic air conditioner, control unit 80 decreases the operation performance of vehicle air conditioner 71, when receiving a signal from outside temperature sensor (sensor, hereinafter) 58 for sensing the temperature in cabin 61. In this case, control unit 80 may decrease the blow capacity of air blower 14 regardless of the setting of the operation performance setting button on ... air conditioned seat device 10 as well. The same advantage as that in the above-mentioned makeup is also available in this case.

Control unit 80 may be connected with vehicle speed sensor (sensor, hereinafter) 82 for sensing the traveling speed of an automobile, and may set the blow volume of air blower 14 according to the traveling speed regardless of the setting of operation performance setting button on air conditioned seat device 10. If control unit 80 is programmed so as to reduce the blow capacity of air blower 14 at a vehicle speed of 40 km per hour or lower, the blow capacity of air blower 14 decreases with a low vehicle speed and low vehicle noise. Consequently, the noise of air blower 14 is not heard owing to that of the vehicle.

Control unit 80 may be connected with engine revolution sensor (sensor, hereinafter) 83 for sensing revolutions of engine 78, and may set the blow volume of air blower 14 according to the engine revolutions regardless of the setting of operation performance setting button on air conditioned seat device 10. If control unit 80 is programmed so as to reduce the blow capacity of air blower 14 at an engine revolutions of 1,500 r.p.m. or lower, the blow capacity of air blower 14 decreases with a low engine 78 revolutions and low vehicle noise. Consequently, the noise of air blower 14 is not heard owing to that of engine 78.

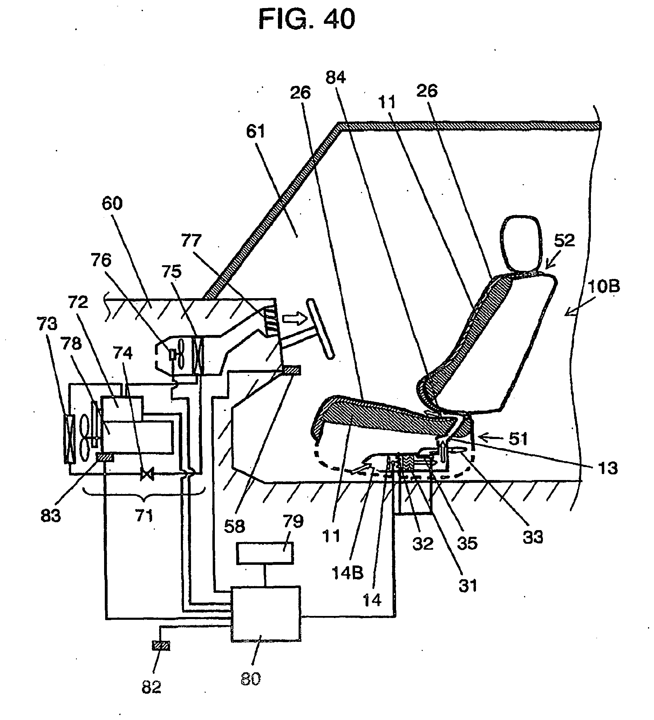

The above description is made with air conditioned seat device 10 shown in Fig. 7 as an example, but other air conditioned seat device 10 described in the first to sixth exemplary embodiments may be applied. Further, seat 10B provided with only seat air outlet 84 for sending air: from air blower 14 and conditioning unit 12B as shown in Fig. 40 offers the similar advantage.

In the makeup shown in Fig. 39, control unit 80 controls both air conditioned seat device 10 and vehicle air conditioner 71, but separate control units for controlling each of them may be provided and interlocked. In this case, sensors 58, 82, 83 may be connected to the control unit for controlling air conditioned seat device 10.

As control unit 80 is connected to air blower 76, control unit 80 can senses the air volume of air blower 76. On the other hand, when control units are separately provided, an air volume sensor made of a wind gauge or the like for measuring the air volume of air blower 76 may be provided at outlets 77, for example, and connected to the control unit for controlling air conditioned seat device 10. In other words, control unit 80 functions as an air volume sensor for measuring the air volume of air blower 76; control unit 80 sets the air volume of air blower 14 according to output from the air volume sensor.

The above description illustrates the case where air conditioned seat device 10 is installed in cabin 61, but device 10 may be placed in a room of a house or office and interlocked with an air conditioner driven from commercial power for air-conditioning the inside of the room. In this case, the control unit may be divided in units as mentioned above and the divided units may be connected to each other wirelessly.

In the above-mentioned respective exemplary embodiments, their unique makeup realizes its advantage even if singly applied. Meanwhile, their unique makeup can be applied in combination to the extent possible. Such makeup is included in the present invention.

### INDUSTRIAL APPLICABILITY

An air conditioned seat device according the present invention can use the common makeup independently of the blow-out condition of the air sent by the air blower and of changes in seat design and the like. The air conditioned seat device can be applied to an automobile use such as a car seat heater and to heating appliances.

### REFERENCE MARKS IN THE DRAWINGS.

- 1: support member
- 2: duct
- 3: porous member
- 4: seat cover
- 8: conditioned air
- 10: air conditioned seat device
- 10B: seat
- 11: support member
- 12A, 12B, 12C: air conditioning unit
- 13,13D: duct
- 13A, 13B, 13C, 13E, 13F, 13G: vent groove
- 14, 14A: air blower
- 14B: air inlet
- 15: peltiert element
- 16: first heat exchanger
- 17: second heat exchanger
- 18: dehumidifier
- 19: drainpipe
- 20: evaporating pan
- 21: air layer member
- 22, 22B, 22C PTC: heater
- 22A: air flow-out opening
- 23: electrically insulating substrate
- 24: electrode
- 25: heating element material
- 26, 26B, 26C: skin
- 26A: outlet
- 26D: surface material
- 26E: seating surface
- 31: dehumidifier
- 32: heater unit
- 33: vent
- 34: stepping motor
- 35: outlet air duct selector
- 41A, 41B: control unit
- 42: surface temperature sensor
- 43, 44: curve
- 48: pad
- 51: seating portion
- 52: back portion
- 53: power level adjusting unit
- 54: control unit
- 55: dry air temperature sensor
- 56: dry air humidity sensor
- 57: temperature sensor
- 58: outside temperature sensor
- 59: outside humidity sensor
- 60: automobile
- 61: cabin
- 71: vehicle air conditioner
- 72: compressor
- 73: condenser
- 74: decompressor
- 75: vaporizer
- 76: cabin air blower
- 77: outlet
- 78: engine
- 79: operation setting unit
- 80: control unit
- 82: vehicle speed sensor
- 83: engine revolution sensor
- 84: seat air outlet

## Claims

1. An air conditioned seat device (10), comprising:
a support member (11) forming a framework of said seat device (10) and including a first duct (13) through which air passes;
a first air blower (14) configured to take in air from an outside and pass the air through the first duct (13);
a skin (26, 26B, 26C) configured to pass the air sent from the first air blower (14), the skin (26, 26B, 26C) forming a seating surface (26E);
a sponge-like air layer member (21) capable of volume deformation, configured to temporarily and uniformly store the air supplied from the first duct (13) to form an air layer, the air layer member (21) being provided between the support member (11) and the skin (26, 26B, 26C), said air layer member (21) being positioned in an air flow path from said first duct to openings (26A), whereby air flows through said air layer member (21);
**characterized in that** said seat device (10) further comprises an air-impermeable sheet member (22) covering the air layer member (21), the sheet member being provided with air flow-out opening (22A) configured to induce the air to flow out from the air layer, wherein
said air layer member (21) faces said first duct (13).

2. The air conditioned seat device according to claim 1, wherein the sheet member includes a heating element (22, 22B, 22C).

3. The air conditioned seat device according to claim 2, wherein the heating element (22, 22B, 22C) is a PTC heater with a self-temperature-control function, having an electrode (24) and heating element material (25) disposed on an insulated substrate (23).

4. The air conditioned seat device according to claim 2, further comprising a control unit (41A, 41B, 54, 80) configured to control energization for the heating element (22, 22B, 22C) and driving of the first air blower (14), wherein the control unit (41A, 41B, 54, 80) drives the first air blower (14) after a predetermined time elapses from starting energization of the heating element (22, 22B, 22C) .

5. The air conditioned seat device according to claim 2, further comprising a control unit (41A, 41B, 54, 80) configured to control energization of the heating element (22, 22B, 22C) and driving of the first air blower (14), wherein the control unit (41A, 41B, 54, 80) drives the first air blower (14) intermittently after starting energization of the heating element (22, 22B, 22C) .

6. The air conditioned seat device according to claim 2, further comprising a control unit (41A, 41B, 54, 80) configured to control energization of the heating element (22, 22B, 22C) and driving of the first air blower (14), wherein the control unit (41A, 41B, 54, 80) performs energization of the heating element (22, 22B, 22C) and driving of the first air blower (14) alternately to send air from the first duct (13) intermittently.

7. The air conditioned seat device according to one of claims 4 to 6, further comprising:
a surface temperature sensor (42) configured to sense temperature near the skin (26, 26B, 26C),
wherein the control unit (41A, 41B, 54, 80) stops the first air blower (14) when output from the surface temperature sensor (42) becomes lower than a predetermined value.

8. The air conditioned seat device according to claim 2, further comprising:
a surface temperature sensor (42) configured to sense temperature near the skin (26, 26B, 26C); and
a control unit (41A, 41B, 54, 80) configured to control energization of the heating element (22, 22B, 22C) and driving of the first air blower (14), wherein the control unit (41A, 41B, 54, 80) drives the first air blower (14) when output from the surface temperature sensor (42) becomes at least a first value after starting energization of the heating element (22, 22B, 22C) .

9. The air conditioned seat device according to claim 8, wherein the control unit (41A, 41B, 54, 80) stops the first air blower (14) when output from the surface temperature sensor (42) becomes a second value which is lower than the first value.

10. The air conditioned seat device according to claim 2, wherein the air conditioned seat device (10) has a back portion (52) and a seating portion (51), and a disposition pattern of the heating element (22, 22B, 22C) at the back portion (52) differs from that at the seating portion (51).

11. The air conditioned seat device according to claim 1, further comprising an air conditioning unit (12A, 12B, 12C) configured to condition air sent from the first air blower (14) to the first duct (13).

12. The air conditioned seat device according to claim 11, wherein the air conditioning unit (12A, 12B, 12C) dehumidifies air sent from the first air blower (14) to the first duct (13).

13. The air conditioned seat device according to claim 12, wherein the air conditioning unit (12A, 12B, 12C) has a first dehumidifier (18, 31) configured to dehumidify air with adsorption and a first heater unit (32) configured to heat the first dehumidifier (18, 31).

14. The air conditioned seat device according to claim 13, further comprising a control unit (41A, 41B, 54, 80) configured to control energization of the first heater unit (32) and driving of the first air blower (14), wherein the control unit (41A, 41B, 54, 80) repeatedly performs a recycle mode that activates the first heater unit (32) and recovers dehumidification performance of the first dehumidifier (18, 31), and a dehumidify mode that dehumidifies air sent from the first air blower (14); and additionally controls an energizing amount for the first heater unit (32) in the recycle mode so as to be maximized immediately after starting operation.

15. The air conditioned seat device according to claim 14, wherein the control unit (41A, 41B, 54, 80) controls duration of the recycle mode so as to be maximized immediately after starting operation.

16. The air conditioned seat device according to claim 14, wherein the control unit (41A, 41B, 54, 80) controls so that energization time for the first heater unit (32) in the recycle mode is maximized immediately after starting operation.

17. The air conditioned seat device according to claim 14, wherein the control unit (41A, 41B, 54, 80) performs intermittent control of energization time for the first heater unit (32) in the recycle mode so as to be maximized immediately after starting operation.

18. The air conditioned seat device according to claim 13, further comprising:
a second air blower (14) configured to take in air from an outside and pass the air through a second duct (13), different from the first duct (13);
a second dehumidifier (18, 31) configured to dehumidify the air sent from the second air blower (14);
a second heater unit (32) configured to heat the second dehumidifier (18, 31); and
a control unit (41A, 41B, 54, 80) configured to control at least energization for the first heater unit (32) and the second heater unit (32), wherein the control unit (41A, 41B, 54, 80), during energization of the first heater unit (32), performs one of stopping energization for the second heater unit (32) and controlling an energizing amount.

19. The air conditioned seat device according to claim 13, further comprising:
a dry air temperature sensor (55) configured to sense temperature of air dehumidified by the air conditioning unit (12A, 12B, 12C); and
a control unit (41A, 41B, 54, 80) configured to accept output from the dry air temperature sensor (55), wherein the control unit (41A, 41B, 54, 80) restricts an energizing amount for the first heater unit (32) when output from the dry air temperature sensor (55) is equal to or lower than a predetermined value.

20. The air conditioned seat device according to claim 13, further comprising:
a dry air humidity sensor (56) configured to sense humidity of air dehumidified by the air conditioning unit (12A, 12B, 12C); and
a control unit (41A, 41B, 54, 80) configured to accept output from the dry air humidity sensor (56), wherein the control unit (41A, 41B, 54, 80) restricts an energizing amount for the first heater unit (32) when output from the dry air humidity sensor (56) is equal to or lower than a predetermined value.

21. The air conditioned seat device according to claim 13, further comprising:
a temperature sensor (57) configured to sense temperature of the first dehumidifier (18, 31); and
a control unit (41A, 41B, 54, 80) configured to accept output from the temperature sensor (57), wherein the control unit (41A, 41B, 54, 80) restricts an energizing amount for the first heater unit (32) when output from the temperature sensor (57) is equal to or higher than a predetermined value.

22. The air conditioned seat device according to claim 13, further comprising:
an outside air temperature sensor (58) configured to sense temperature outside the air conditioned seat device (10); and
a control unit (41A, 41B, 54, 80) configured to accept output from the outside air temperature sensor (58), wherein the control unit (41A, 41B, 54, 80) restricts an energizing amount for the first heater unit (32) when output from the outside air temperature sensor (58) is equal to or lower than a predetermined value.

23. The air conditioned seat device according to claim 13, further comprising:
an outside air humidity sensor (59) configured to sense humidity outside the air conditioned seat device (10); and
a control unit (41A, 41B, 54, 80) configured to accept output from the outside air humidity sensor (59), wherein the control unit (41A, 41B, 54, 80) restricts an energizing amount for the first heater unit (32) when output from the outside air humidity sensor (59) is equal to or lower than a predetermined value.

24. The air conditioned seat device according to claim 7, wherein the air conditioning unit (12A, 12B, 12C) adjusts temperature of air sent from the first air blower (14) to the first duct (13).

25. The air conditioned seat device according to claim 1, further comprising a flexible pad (48) covering the sheet member, the flexible pad (48) being provided between the sheet member and the skin (26, 26B, 26C), and passing air from the air flow-out opening (22A).

26. The air conditioned seat device according to claim 1, wherein the support member (11) is made of an air-impermeable elastic body and is provided with a vent groove (13A) communicating with the seating surface (26E) from a side of the support member (11), and the first duct (13) communicates with the vent groove (13A).

27. The air conditioned seat device according to claim 1, wherein the skin (26, 26B, 26C) is provided with an outlet (26A) for blowing out air.

28. The air conditioned seat device according to claim 27, wherein the air conditioned seat device (10) has a back portion (52) and a seating portion (51), and a disposition pattern of the outlet (26A) at the back portion (52) differs from that at the seating portion (51).

29. The air conditioned seat device according to claim 1, wherein the skin (26, 26B, 26C) is made of air-permeable seat surface material (26D).

30. The air conditioned seat device according to claim 26, wherein a part covering at least a part of at least the vent groove (13A) in the skin (26, 26B, 26C) is air-impermeable.

31. The air conditioned seat device according to claim 26, comprising air-impermeable surface material (26D) covering at least a part of the vent groove (13A).

32. The air conditioned seat device according to claim 1, wherein the first duct (13) is made of material with an elastic modulus equal to or smaller than that of the support member (11).

33. The air conditioned seat device according to claim 1, further comprising:
an air volume sensor configured to sense air volume of a third air blower (76) provided at an outside air conditioning device (71) that air-conditions a space in which the air conditioned seat device (10) is placed; and
a control unit (80) configured to set air volume of the first air blower (14) according to output from the air volume sensor.

34. The air conditioned seat device according to claim 33, wherein the air conditioned seat device (10) is mounted on an automobile (60) and further has a vehicle speed sensor (82) configured to sense traveling speed of the automobile (60), and the control unit (80) sets blow volume of the first air blower (14) according to output from the vehicle speed sensor (82).

35. The air conditioned seat device according to claim 33, wherein the air conditioned seat device (10) is mounted on an automobile (60) having an engine (78) and further has an engine revolution sensor (83) configured to sense revolution speed of the engine (78), and the control unit (80) sets blow volume of the first air blower (14) according to output from the engine speed sensor (82).

36. An air conditioning system, comprising:
an air conditioned seat device (10) as defined in claim 1 ; and
an outside air conditioning device (71) configured to air-condition a space in which the air conditioned seat device (10) is placed, the outside air conditioning device (71) having a third air blower (76); and
a control unit (80) configured to control operation of the air conditioned seat device (10) and the outside air conditioning device (71),
wherein the air conditioned seat device (10) further has an air volume sensor configured to sense air volume of the third air blower (76), and the control unit (80) sets blow volume of the first air blower (14) according to the blow volume of the third air blower (76).

37. The air conditioning system according to claim 36, wherein the air conditioned seat device (10) is mounted in a cabin (61) of an automobile (60), and the outside air conditioning device (71) air-conditions the inside of the cabin (61), the air conditioning system (71) further has a vehicle speed sensor (82) configured to sense traveling speed of the automobile (60), and the control unit (80) sets blow volume of the first air blower (14) according to output from the vehicle speed sensor (82).

38. The air conditioning system according to claim 36, wherein the air conditioned seat device (10) is mounted in a cabin (61) of an automobile (60), and the outside air conditioning device (71) air-conditions the inside of the cabin (61), the air conditioning system (71) further has an engine revolution sensor (83) configured to sense revolution speed of the engine (78), and the control unit (80) sets blow volume of the first air blower (14) according to output from the engine speed sensor (83).

## Patentansprüche

1. Klimatisierte Sitzvorrichtung (10) mit :
einem Stützteil (11), das einen Rahmen der Sitzvorrichtung (10) bildet, und das einen ersten Kanal (13) hat, durch den Luft strömt;
einem ersten Gebläse (14), das so konfiguriert ist, dass es Luft von außen ansaugt und die Luft durch den ersten Kanal (13) strömen lässt;
einem Bezug (26, 26B, 26C), der so konfiguriert ist, dass er die Luft, die von dem ersten Gebläse (14) zugeführt wird, durchlässt, wobei der Bezug (26, 26B, 26C) eine Sitzfläche (26E) bildet; und
einem schwammartigen Luftschichtteil (21), das sein Volumen verformen kann und so konfiguriert ist, dass es die von dem ersten Kanal (13) zugeführte Luft vorübergehend und gleichmäßig speichert, um eine Luftschicht zu bilden, wobei das Luftschichtteil (21) zwischen dem Stützteil (11) und dem Bezug (26, 26B, 26C) in einem Luftstromweg von dem ersten Kanal hin zu Öffnungen (22A) vorgesehen ist, sodass Luft durch das Luftschichtteil (21) strömt, **dadurch gekennzeichnet, dass** die Sitzvorrichtung (10) ferner umfasst ein luftundurchlässiges Flächenteil das Luftschichtteil (21) bedeckt, wobei das Flächenteil mit Luftauslassöffnungen (22A) versehen ist, die so konfiguriert sind, dass sie Luft ansaugen, die dann aus der Luftschicht ausströmt,
wobei das Luftschichtteil(21) dem ersten Kanal (13) zugekehrt ist.

2. Klimatisierte Sitzvorrichtung nach Anspruch 1, **dadurch gekennzeichnet, dass** das Flächenteil ein Heizelement (22, 22B, 22C) aufweist.

3. Klimatisierte Sitzvorrichtung nach Anspruch 2, **dadurch gekennzeichnet, dass** das Heizelement (22, 22B, 22C) ein PTC-Heizer mit einer Temperatur-Selbstregelungsfunktion ist, der eine Elektrode (24) und ein Heizelement-Material (25) hat, die auf einem isolierten Substrat (23) angeordnet sind.

4. Klimatisierte Sitzvorrichtung nach Anspruch 2, die weiterhin eine Steuereinheit (41A, 41B, 54, 80) aufweist, die so konfiguriert ist, dass sie die Versorgung des Heizelements (22, 22B, 22C) mit Strom und die Ansteuerung des ersten Gebläses (14) steuert, wobei die Steuereinheit (41A, 41B, 54, 80) das erste Gebläse (14) erst dann ansteuert, nachdem eine vorgegebene Zeit vom Beginn der Versorgung des Heizelements (22, 22B, 22C) mit Strom vergangen ist.

5. Klimatisierte Sitzvorrichtung nach Anspruch 2, die weiterhin eine Steuereinheit (41A, 41B, 54, 80) aufweist, die so konfiguriert ist, dass sie die Versorgung des Heizelements (22, 22B, 22C) mit Strom und die Ansteuerung des ersten Gebläses (14) steuert, wobei die Steuereinheit (41A, 41B, 54, 80) das erste Gebläse (14) nach dem Beginn der Versorgung des Heizelements (22, 22B, 22C) mit Strom diskontinuierlich ansteuert.

6. Klimatisierte Sitzvorrichtung nach Anspruch 2, die weiterhin eine Steuereinheit (41A, 41B, 54, 80) aufweist, die so konfiguriert ist, dass sie die Versorgung des Heizelements (22, 22B, 22C) mit Strom und die Ansteuerung des ersten Gebläses (14) steuert, wobei die Steuereinheit (41A, 41B, 54, 80) die Versorgung des Heizelements (22, 22B, 22C) mit Strom abwechselnd mit der Ansteuerung des ersten Gebläse (14) durchführt, um Luft diskontinuierlich aus dem ersten Kanal (13) abzugeben.

7. Klimatisierte Sitzvorrichtung nach einem der Ansprüche 4 bis 6, die weiterhin einen Oberflächentemperatursensor (42) aufweist, der so konfiguriert ist, dass er die Temperatur in der Nähe des Bezugs (26, 26B, 26C) abtastet, wobei die Steuereinheit (41A, 41B, 54, 80) das erste Gebläse (14) ausschaltet, wenn der Ausgabewert von dem Oberflächentemperatursensor (42) kleiner als ein vorgegeben Wert wird.

8. Klimatisierte Sitzvorrichtung nach Anspruch 2, die weiterhin Folgendes aufweist:
einen Oberflächentemperatursensor (42), der so konfiguriert ist, dass er die Temperatur in der Nähe des Bezugs (26, 26B, 26C) abtastet; und
eine Steuereinheit (41A, 41B, 54, 80), die so konfiguriert ist, dass sie die Versorgung des Heizelements (22, 22B, 22C) mit Strom und die Ansteuerung des ersten Gebläses (14) steuert, wobei die Steuereinheit (41A, 41B, 54, 80) das erste Gebläse (14) ansteuert, wenn der Ausgabewert von dem Oberflächentemperatursensor (42) mindestens einen ersten Wert nach dem Beginn der Versorgung des Heizelements (22, 22B, 22C) mit Strom erreicht.

9. Klimatisierte Sitzvorrichtung nach Anspruch 8, **dadurch gekennzeichnet, dass** die Steuereinheit (41A, 41B, 54, 80) das erste Gebläse (14) ausschaltet, wenn der Ausgabewert von dem Oberflächentemperatursensor (42) einen zweite Wert erreicht, der niedriger als der erste Wert ist.

10. Klimatisierte Sitzvorrichtung (10) nach Anspruch 2, **dadurch gekennzeichnet, dass**
sie einen Sitzteil (51) und einen hinteren Teil (52) hat und
ein Anordnungsmuster des Heizelements (22, 22B, 22C) an dem hinteren Teil (52) von dem an dem Sitzteil (51) verschieden ist.

11. Klimatisierte Sitzvorrichtung nach Anspruch 1, die weiterhin eine Klimatisierungseinheit (12A, 12B, 12C) aufweist, die so konfiguriert ist, dass sie Luft klimatisiert, die von dem ersten Gebläse (14) zu dem ersten Kanal (13) geführt wird.

12. Klimatisierte Sitzvorrichtung nach Anspruch 11, **dadurch gekennzeichnet, dass** die Klimatisierungseinheit (12A, 12B, 12C) Luft entfeuchtet, die von dem ersten Gebläse (14) zu dem ersten Kanal (13) geführt wird.

13. Klimatisierte Sitzvorrichtung nach Anspruch 12, **dadurch gekennzeichnet, dass** die Klimatisierungseinheit (12A, 12B, 12C) Folgendes aufweist:
einen ersten Entfeuchter (18, 31), der so konfiguriert ist, dass er Luft durch Adsorption entfeuchtet; und
eine erste Heizereinheit (32), die so konfiguriert ist, dass sie den ersten Entfeuchter (18, 31) heizt.

14. Klimatisierte Sitzvorrichtung nach Anspruch 13, die weiterhin eine Steuereinheit (41A, 41B, 54, 80) aufweist, die so konfiguriert ist, dass sie
die Versorgung der ersten Heizereinheit (32) mit Strom und die Ansteuerung des ersten Gebläses (14) steuert, wobei die Steuereinheit (41A, 41B, 54, 80) mehrmals einen Wiederherstellungsmodus, der die erste Heizereinheit (32) in Betrieb setzt und die Entfeuchtungsleistung des ersten Entfeuchters (18, 31) wiederherstellt, und einen Entfeuchtungsmodus durchführt, der Luft entfeuchtet, die von dem ersten Gebläse (14) abgegeben wird, und außerdem
eine Strommenge für die Versorgung der ersten Heizereinheit (32) mit Strom in dem Wiederherstellungsmodus so steuert, dass sie sofort nach Beginn des Betriebs auf den Höchstwert gebracht wird.

15. Klimatisierte Sitzvorrichtung nach Anspruch 14, **dadurch gekennzeichnet, dass** die Steuereinheit (41A, 41B, 54, 80) die Dauer des Wiederherstellungsmodus so steuert, dass sie sofort nach Beginn des Betriebs maximal ist.

16. Klimatisierte Sitzvorrichtung nach Anspruch 14, **dadurch gekennzeichnet, dass** die Steuereinheit (41A, 41B, 54, 80) die Steuerung so durchführt, dass die Dauer der Stromversorgung für die erste Heizereinheit (32) in dem Wiederherstellungsmodus sofort nach Beginn des Betriebs maximal ist.

17. Klimatisierte Sitzvorrichtung nach Anspruch 14, **dadurch gekennzeichnet, dass** die Steuereinheit (41A, 41B, 54, 80) eine Ein-Aus-Steuerung der Dauer der Stromversorgung für die erste Heizereinheit (32) in dem Wiederherstellungsmodus so durchführt, dass sie sofort nach Beginn des Betriebs maximal ist.

18. Klimatisierte Sitzvorrichtung nach Anspruch 13, die weiterhin Folgendes aufweist:
ein zweites Gebläse (14), das so konfiguriert ist, dass es Luft von außen ansaugt und die Luft durch einen zweiten Kanal (13) strömen lässt, der von dem ersten Kanal (13) verschieden ist;
einen zweiten Entfeuchter (18, 31), der so konfiguriert ist, dass er die Luft entfeuchtet, die von dem zweiten Gebläse (14) abgegeben wird;
eine zweite Heizereinheit (32), die so konfiguriert ist, dass sie den zweiten Entfeuchter (18, 31) heizt; und
eine Steuereinheit (41A, 41B, 54, 80), die so konfiguriert ist, dass sie zumindest die Versorgung der ersten Heizereinheit (32) und der zweiten Heizereinheit (32) mit Strom steuert, wobei die Steuereinheit (41A, 41B, 54, 80) während der Versorgung der ersten Heizereinheit (32) mit Strom die Stromversorgung der zweiten Heizereinheit (32) unterbricht oder eine Strommenge für die Stromversorgung steuert.

19. Klimatisierte Sitzvorrichtung nach Anspruch 13, die weiterhin Folgendes aufweist:
einen Trockenluft-Temperatursensor (55), der so konfiguriert ist, dass er die Temperatur der Luft abtastet, die von der Klimatisierungseinheit (12A, 12B, 12C) entfeuchtet worden ist; und
eine Steuereinheit (41A, 41B, 54, 80), die so konfiguriert ist, dass sie den Ausgabewert von dem Trockenluft-Temperatursensor (55) empfängt, wobei die Steuereinheit (41A, 41B, 54, 80) eine Strommenge für die Stromversorgung der ersten Heizereinheit (32) begrenzt, wenn der Ausgabewert von dem Trockenluft-Temperatursensor (55) gleich einem vorgegebenen Wert oder kleiner als dieser ist.

20. Klimatisierte Sitzvorrichtung nach Anspruch 13, die weiterhin Folgendes aufweist:
einen Trockenluft-Feuchtesensor (56), der so konfiguriert ist, dass er die Feuchte der Luft abtastet, die von Klimatisierungseinheit (12A, 12B, 12C) entfeuchtet wird; und
eine Steuereinheit (41A, 41B, 54, 80), die so konfiguriert ist, dass sie den Ausgabewert von dem Trockenluft-Feuchtesensor (56) empfängt, wobei die Steuereinheit (41A, 41B, 54, 80) eine Strommenge für die Stromversorgung der ersten Heizereinheit (32) begrenzt, wenn der Ausgabewert von dem Trockenluft-Feuchtesensor (56) gleich einem vorgegebenen Wert oder kleiner als dieser ist.

21. Klimatisierte Sitzvorrichtung nach Anspruch 13, die weiterhin Folgendes aufweist:
einen Temperatursensor (57), der so konfiguriert ist, dass er die Temperatur des ersten Entfeuchters (18, 31) abtastet; und
eine Steuereinheit (41A, 41B, 54, 80), die so konfiguriert ist, dass sie den Ausgabewert von dem Temperatursensor (57) empfängt, wobei die Steuereinheit (41A, 41B, 54, 80) eine Strommenge für die Stromversorgung der ersten Heizereinheit (32) begrenzt, wenn der Ausgabewert von dem Temperatursensor (57) gleich einem vorgegebenen Wert oder kleiner als dieser ist.

22. Klimatisierte Sitzvorrichtung nach Anspruch 13, die weiterhin Folgendes aufweist:
einen Außenluft-Temperatursensor (58), der so konfiguriert ist, dass er die Temperatur außerhalb der klimatisierten Sitzvorrichtung (10) abtastet; und
eine Steuereinheit (41A, 41B, 54, 80), die so konfiguriert ist, dass sie den Ausgabewert von dem Außenluft-Temperatursensor (58) empfängt, wobei die Steuereinheit (41A, 41B, 54, 80) eine Strommenge für die Stromversorgung der ersten Heizereinheit (32) begrenzt, wenn der Ausgabewert von dem Außenluft-Temperatursensor (58) gleich einem vorgegebenen Wert oder kleiner als dieser ist.

23. Klimatisierte Sitzvorrichtung nach Anspruch 13, die weiterhin Folgendes aufweist:
einen Außenluft-Feuchtesensor (59), der so konfiguriert ist, dass er die Feuchte außerhalb der klimatisierten Sitzvorrichtung (10) abtastet; und
eine Steuereinheit (41A, 41B, 54, 80), die so konfiguriert ist, dass sie den Ausgabewert von dem Außenluft-Feuchtesensor (59) empfängt, wobei die Steuereinheit (41A, 41B, 54, 80) eine Strommenge für die Stromversorgung der ersten Heizereinheit (32) begrenzt, wenn der Ausgabewert von dem Außenluft-Feuchtesensor (59) gleich einem vorgegebenen Wert oder kleiner als dieser ist.

24. Klimatisierte Sitzvorrichtung nach Anspruch 7, **dadurch gekennzeichnet, dass** die Klimatisierungseinheit (12A, 12B, 12C) die Temperatur der Luft einstellt, die von dem ersten Gebläse (14) in den ersten Kanal (13) eingespeist wird.

25. Klimatisierte Sitzvorrichtung nach Anspruch 1, die weiterhin ein flexibles Polster (48) aufweist, das das Flächenteil bedeckt, wobei das flexible Polster (48) zwischen dem Flächenteil und dem Bezug (26, 26B, 26C) vorgesehen ist und Luft von der Luftauslassöffnung (22A) durchlässt.

26. Klimatisierte Sitzvorrichtung nach Anspruch 1, **dadurch gekennzeichnet, dass**
das Stützteil (11) aus einem luftundurchlässigen elastischen Körper besteht und mit einer Entlüftungsnut (13A) versehen ist, die mit der Sitzfläche (26E) von einer Seite des Stützteils (11) in Verbindung steht, und
der erste Kanal (13) mit der Entlüftungsnut (13A) in Verbindung steht.

27. Klimatisierte Sitzvorrichtung nach Anspruch 1, **dadurch gekennzeichnet, dass** der Bezug (26, 26B, 26C) mit einem Auslass (26A) zum Ablassen von Luft versehen ist.

28. Klimatisierte Sitzvorrichtung (10) nach Anspruch 27, **dadurch gekennzeichnet, dass** sie einen hinteren Teil (52) und einen Sitzteil (51) hat und ein Anordnungsmuster des Auslasses (26A) an dem hinteren Teil (52) von dem an dem Sitzteil (51) verschieden ist.

29. Klimatisierte Sitzvorrichtung nach Anspruch 1, **dadurch gekennzeichnet, dass** der Bezug (26, 26B, 26C) aus einem luftdurchlässigen Sitzflächenmaterial (26D) besteht.

30. Klimatisierte Sitzvorrichtung nach Anspruch 26, **dadurch gekennzeichnet, dass** ein Teil, das zumindest einen Teil zumindest der Entlüftungsnut (13A) in dem Bezug (26, 26B, 26C) bedeckt, luftundurchlässig ist.

31. Klimatisierte Sitzvorrichtung nach Anspruch 26, die ein luftundurchlässiges Oberflächenmaterial (26D) aufweist, das zumindest einen Teil der Entlüftungsnut (13A) bedeckt.

32. Klimatisierte Sitzvorrichtung nach Anspruch 1, **dadurch gekennzeichnet, dass** der erste Kanal (13) aus einem Material mit einem Elastizitätsmodul besteht, der gleich dem des Stützteils (11) oder kleiner als dieser ist.

33. Klimatisierte Sitzvorrichtung nach Anspruch 1, die weiterhin Folgendes aufweist:
einen Luftmengensensor, der so konfiguriert ist, dass er die Luftmenge eines dritten Gebläses (76) abtastet, das an einer Außenluft-Klimatisierungsvorrichtung (71) vorgesehen ist, die einen Raum klimatisiert, in dem sich die klimatisierte Sitzvorrichtung (10) befindet; und
eine Steuereinheit (80), die so konfiguriert ist, dass sie die Luftmenge des ersten Gebläses (14) entsprechend dem Ausgabewert von dem Luftmengensensor einstellt.

34. Klimatisierte Sitzvorrichtung nach Anspruch 33, **dadurch gekennzeichnet, dass**
die klimatisierte Sitzvorrichtung (10) in einem Kraftfahrzeug (60) installiert ist und weiterhin einen Fahrzeug-Geschwindigkeitssensor (82) hat, der so konfiguriert ist, dass er die Fahrgeschwindigkeit des Fahrzeugs (60) abtastet, und
die Steuereinheit (80) die Ausblasmenge des ersten Gebläses (14) entsprechend dem Ausgabewert von dem Fahrzeug-Geschwindigkeitssensor (82) einstellt.

35. Klimatisierte Sitzvorrichtung (10) nach Anspruch 33, **dadurch gekennzeichnet, dass**
sie in einem Kraftfahrzeug (60), das einen Motor (78) hat, installiert ist und weiterhin einen Motordrehzahlsensor (83) aufweist, der so konfiguriert ist, dass er die Drehzahl des Motors (78) abtastet, und
die Steuereinheit (80) die Ausblasmenge des ersten Gebläses (14) entsprechend dem Ausgabewert von dem Motordrehzahlsensor (82) einstellt.

36. Klimaanlage mit:
einer klimatisierten Sitzvorrichtung (10) nach Anspruch 1;
einer Außenluft-Klimatisierungsvorrichtung (71), die so konfiguriert ist, dass sie einen Raum klimatisiert, in dem sich die klimatisierte Sitzvorrichtung (10) befindet, wobei die Außenluft-Klimatisierungsvorrichtung (71) ein drittes Gebläse (76) hat; und
einer Steuereinheit (80), die so konfiguriert ist, dass sie den Betrieb der klimatisierten Sitzvorrichtung (10) und der Außenluft-Klimatisierungsvorrichtung (71) steuert,
wobei
die klimatisierte Sitzvorrichtung (10) weiterhin einen Luftmengensensor aufweist, der so konfiguriert ist, dass er die Luftmenge des dritten Gebläses (76) abtastet, und
die Steuereinheit (80) die Ausblasmenge des ersten Gebläses (14) entsprechend der Ausblasmenge des dritten Gebläses (76) einstellt.

37. Klimaanlage nach Anspruch 36, **dadurch gekennzeichnet, dass**
die klimatisierte Sitzvorrichtung (10) in einem Fahrgastraum (61) eines Kraftfahrzeugs (60) installiert ist,
die Außenluft-Klimatisierungsvorrichtung (71) das Innere des Fahrgastraums (61) klimatisiert, wobei die Klimaanlage weiterhin einen Fahrzeug-Geschwindigkeitssensor (82) hat, der so konfiguriert ist, dass er die Fahrgeschwindigkeit des Kraftfahrzeugs (60) abtastet, und
die Steuereinheit (80) die Ausblasmenge des ersten Gebläses (14) entsprechend dem Ausgabewert von dem Fahrzeug-Geschwindigkeitssensor (82) einstellt.

38. Klimaanlage nach Anspruch 36, **dadurch gekennzeichnet, dass**
die klimatisierte Sitzvorrichtung (10) in einem Fahrgastraum (61) eines Kraftfahrzeugs (60) installiert ist,
die Außenluft-Klimatisierungsvorrichtung (71) das Innere des Fahrgastraums (61) klimatisiert, wobei die Klimaanlage weiterhin einen Motordrehzahlsensor (83) hat, der so konfiguriert ist, dass er die Drehzahl des Motors (78) abtastet, und
die Steuereinheit (80) die Ausblasmenge des ersten Gebläses (14) entsprechend dem Ausgabewert von dem Motordrehzahlsensor (83) einstellt.

## Revendications

1. Dispositif de siège à air conditionné (10), comprenant :
un élément support (11) formant un cadre dudit dispositif de siège (10) et incluant un premier conduit (13) à travers lequel de l'air passe;
une première soufflante d'air (14) configurée pour aspirer de l'air provenant d'un extérieur et faire passer l'air à travers le premier conduit (13);
une peau (26, 26B, 26C) configurée pour laisser passer l'air envoyé de la première soufflante d'air (14), la peau (26, 26B, 26C) formant une surface d'assise (26E) ;
un élément de couche d'air (21) semblable à une éponge apte à une déformation volumique, configuré pour stocker temporairement et uniformément l'air provenant du premier conduit (13) pour former une couche d'air, l'élément de couche d'air (21) étant prévu entre l'élément support (11) et la peau (26, 26B, 26C), ledit élément de couche d'air (21) étant positionné dans un chemin de flux d'air dudit premier conduit jusqu'à des ouvertures (22A), d'où il résulte que l'air traverse ledit élément de couche d'air (21); **caractérisé en ce que**
ledit dispositif de siège (10) comprend en outre un élément en feuille imperméable à l'air recouvrant l'élément de couche d'air (21), l'élément en feuille étant prévu avec une ouverture de flux de sortie d'air (22A) configurée pour forcer l'air à sortir de la couche d'air, dans lequel
ledit élément de couche d'air (21) fait face audit premier conduit (13).

2. Dispositif de siège à air conditionné selon la revendication 1, dans lequel l'élément en feuille inclut un élément chauffant (22, 22B, 22C).

3. Dispositif de siège à air conditionné selon la revendication 2, dans lequel l'élément chauffant (22, 22B, 22C) est un réchauffeur à CTP avec une fonction de commande automatique de température, ayant une électrode (24) et un matériau d'élément chauffant (25) disposé sur un substrat isolé (23).

4. Dispositif de siège à air conditionné selon la revendication 2, comprenant en outre une unité de commande (41A, 41B, 54, 80) configurée pour commander une alimentation en courant pour l'élément chauffant (22, 22B, 22C) et l'entraînement de la première soufflante d'air (14), dans lequel l'unité de commande (41A, 41B, 54, 80) entraîne la première soufflante d'air (14) après qu'un délai prédéterminé s'est écoulé à compter du début de l'alimentation en courant de l'élément chauffant (22, 22B, 22C).

5. Dispositif de siège à air conditionné selon la revendication 2, comprenant en outre une unité de commande (41A, 41B, 54, 80) configurée pour commander une alimentation en courant de l'élément chauffant (22, 22B, 22C) et l'entraînement de la première soufflante d'air (14), dans lequel l'unité de commande (41A, 41B, 54, 80) entraîne la première soufflante d'air (14) de façon intermittente après début de l'alimentation en courant de l'élément chauffant (22, 22B, 22C).

6. Dispositif de siège à air conditionné selon la revendication 2, comprenant en outre une unité de commande (41A, 41B, 54, 80) configurée pour commander une alimentation en courant de l'élément chauffant (22, 22B, 22C) et l'entraînement de la première soufflante d'air (14), dans lequel l'unité de commande (41A, 41B, 54, 80) effectue l'alimentation en courant de l'élément chauffant (22, 22B, 22C) et l'entraînement de la première soufflante d'air (14) de façon alternée pour envoyer de l'air provenant du premier conduit (13) de façon intermittente.

7. Dispositif de siège à air conditionné selon l'une des revendications 4 à 6, comprenant en outre :
un capteur de température de surface (42) configuré pour capter une température à proximité de la peau (26, 26B, 26C),
dans lequel l'unité de commande (41A, 41B, 54, 80) stoppe la première soufflante d'air (14) lorsqu'une sortie du capteur de température de surface (42) devient inférieure à une valeur prédéterminée.

8. Dispositif de siège à air conditionné selon la revendication 2, comprenant en outre :
un capteur de température de surface (42) configuré pour capter une température à proximité de la peau (26, 26B, 26C), et
une unité de commande (41A, 41B, 54, 80) configurée pour commander une alimentation en courant de l'élément chauffant (22, 22B, 22C) et l'entraînement de la première soufflante d'air (14), dans lequel l'unité de commande (41A, 41B, 54, 80) entraîne la première soufflante d'air (14) lorsqu'une sortie du capteur de température de surface (42) devient au moins une première valeur après début de l'alimentation en courant de l'élément chauffant (22, 22B, 22C).

9. Dispositif de siège à air conditionné selon la revendication 8, dans lequel l'unité de commande (41A, 41B, 54, 80) stoppe la première soufflante d'air (14) lorsqu'une sortie du capteur de température de surface (42) devient une deuxième valeur qui est inférieure à la première valeur.

10. Dispositif de siège à air conditionné selon la revendication 2, dans lequel le dispositif de siège à air conditionné (10) a une partie de dossier (52) et une partie d'assise (51), et un schéma de disposition de l'élément chauffant (22, 22B, 22C) au niveau de la partie de dossier (52) diffère de celui au niveau de la partie d'assise (51).

11. Dispositif de siège à air conditionné selon la revendication 1, comprenant en outre une unité de conditionnement d'air (12A, 12B, 12C) configurée pour conditionner de l'air envoyé de la première soufflante d'air (14) au premier conduit (13).

12. Dispositif de siège à air conditionné selon la revendication 11, dans lequel l'unité de conditionnement d'air (12A, 12B, 12C) déshumidifie l'air envoyé de la première soufflante d'air (14) au premier conduit (13).

13. Dispositif de siège à air conditionné selon la revendication 12, dans lequel l'unité de conditionnement d'air (12A, 12B, 12C) a un premier déshumidificateur (18, 31) configuré pour déshumidifier l'air avec une adsorption et une première unité de chauffage (32) configurée pour chauffer le premier déshumidificateur (18, 31).

14. Dispositif de siège à air conditionné selon la revendication 13, comprenant en outre une unité de commande (41A, 41B, 54, 80) configurée pour commander une alimentation en courant de la première unité de chauffage (32) et l'entraînement de la première soufflante d'air (14), dans lequel l'unité de commande (41A, 41B, 54, 80) exécute de manière répétée un mode de recyclage qui active la première unité de chauffage (32) et récupère la performance de déshumidification du premier déshumidificateur (18, 31), et un mode de déshumidification qui déshumidifie l'air envoyé de la première soufflante d'air (14) ; et commande en outre une quantité l'alimentation en courant pour la première unité de chauffage (32) dans le mode de recyclage de façon à ce qu'elle soit maximisée immédiatement après le début de l'opération.

15. Dispositif de siège à air conditionné selon la revendication 14, dans lequel l'unité de commande (41A, 41B, 54, 80) commande la durée du mode de recyclage de façon à ce qu'elle soit maximisée immédiatement après le début de l'opération.

16. Dispositif de siège à air conditionné selon la revendication 14, dans lequel l'unité de commande (41A, 41B, 54, 80) commande de façon à ce que le temps d'alimentation en courant pour la première unité de chauffage (32) dans le mode de recyclage soit maximisé immédiatement après le début de l'opération.

17. Dispositif de siège à air conditionné selon la revendication 14, dans lequel l'unité de commande (41A, 41B, 54, 80) exécute une commande intermittente du temps d'alimentation en courant pour la première unité de chauffage (32) dans le mode de recyclage de façon à ce qu'il soit maximisé immédiatement après le début de l'opération.

18. Dispositif de siège à air conditionné selon la revendication 13, comprenant en outre :
une deuxième soufflante d'air (14) configurée pour aspirer de l'air d'un extérieur et faire passer l'air à travers un deuxième conduit (13), différent du premier conduit (13) ;
un deuxième déshumidificateur (18, 31) configuré pour déshumidifier l'air envoyé de la deuxième soufflante d'air (14) ;
une deuxième unité de chauffage (32) configurée pour chauffer le deuxième déshumidificateur (18, 31) ; et
une unité de commande (41A, 41B, 54, 80) configurée pour commander au moins une alimentation en courant pour la première unité de chauffage (32) et la deuxième unité de chauffage (32), dans lequel l'unité de commande (41A, 41B, 54, 80), pendant l'alimentation en courant de la première unité de chauffage (32), exécute l'un d'un arrêt de l'alimentation en courant pour la deuxième unité de chauffage (32) et d'une commande d'une quantité d'alimentation en courant.

19. Dispositif de siège à air conditionné selon la revendication 13, comprenant en outre :
un capteur de température d'air sec (55) configuré pour capter la température de l'air déshumidifié par l'unité de conditionnement d'air (12A, 12B, 12C) ; et
une unité de commande (41A, 41B, 54, 80) configurée pour accepter une sortie du capteur de température d'air sec (55), dans lequel l'unité de commande (41A, 41B, 54, 80) limite une quantité d'alimentation en courant pour la première unité de chauffage (32) lorsqu'une sortie du capteur de température d'air sec (55) est égale ou inférieure à une valeur prédéterminée.

20. Dispositif de siège à air conditionné selon la revendication 13, comprenant en outre :
un capteur d'humidité d'air sec (56) configuré pour capter l'humidité de l'air déshumidifié par l'unité de conditionnement d'air (12A, 12B, 12C) ; et
une unité de commande (41A, 41B, 54, 80) configurée pour accepter une sortie du capteur d'humidité d'air sec (56), dans lequel l'unité de commande (41A, 41B, 54, 80) limite une quantité d'alimentation en courant pour la première unité de chauffage (32) lorsqu'une sortie du capteur d'humidité d'air sec (56) est égale ou inférieure à une valeur prédéterminée.

21. Dispositif de siège à air conditionné selon la revendication 13, comprenant en outre :
un capteur de température (57) configuré pour capter une température du premier déshumidificateur (18, 31) ; et
une unité de commande (41A, 41B, 54, 80) configurée pour accepter une sortie du capteur de température (57), dans lequel l'unité de commande (41A, 41B, 54, 80) limite une quantité d'alimentation en courant pour la première unité de chauffage (32) lorsqu'une sortie du capteur de température (57) est égale ou supérieure à une valeur prédéterminée.

22. Dispositif de siège à air conditionné selon la revendication 13, comprenant en outre :
un capteur de température d'air extérieur (58) configuré pour capter une température à l'extérieur du dispositif de siège à air conditionné (10) ; et
une unité de commande (41A, 41B, 54, 80) configurée pour accepter une sortie du capteur de température d'air extérieur (58), dans lequel l'unité de commande (41A, 41B, 54, 80) limite une quantité d'alimentation en courant pour la première unité de chauffage (32) lorsqu'une sortie du capteur de température d'air extérieur (58) est égale ou inférieure à une valeur prédéterminée.

23. Dispositif de siège à air conditionné selon la revendication 13, comprenant en outre :
un capteur d'humidité d'air extérieur (59) configuré pour capter une humidité à l'extérieur du dispositif de siège à air conditionné (10) ; et
une unité de commande (41A, 41B, 54, 80) configurée pour accepter une sortie du capteur d'humidité d'air extérieur (59), dans lequel l'unité de commande (41A, 41B, 54, 80) limite une quantité d'alimentation en courant pour la première unité de chauffage (32) lorsqu'une sortie du capteur d'humidité d'air extérieur (59) est égale ou inférieure à une valeur prédéterminée.

24. Dispositif de siège à air conditionné selon la revendication 7, dans lequel l'unité de conditionnement d'air (12A, 12B, 12C) ajuste la température de l'air envoyé de la première soufflante d'air (14) au premier conduit (13) .

25. Dispositif de siège à air conditionné selon la revendication 1, comprenant en outre un rembourrage flexible (48) recouvrant l'élément en feuille, le rembourrage flexible (48) étant prévu entre l'élément en feuille et la peau (26, 26B, 26C), et laissant passer l'air provenant de l'ouverture de flux de sortie d'air (22A).

26. Dispositif de siège à air conditionné selon la revendication 1, dans lequel l'élément support (11) est constitué d'un corps élastique imperméable à l'air et est prévu avec une rainure d'aération (13A) communiquant avec la surface d'assise (26E) par un côté de l'élément support (11), et le premier conduit (13) communique avec la rainure d'aération (13A).

27. Dispositif de siège à air conditionné selon la revendication 1, dans lequel la peau (26, 26B, 26C) est prévue avec une sortie (26A) pour souffler l'air vers l'extérieur.

28. Dispositif de siège à air conditionné selon la revendication 27, dans lequel le dispositif de siège à air conditionné (10) a une partie de dossier (52) et une partie d'assise (51), et un schéma de disposition de la sortie (26A) au niveau de la partie de dossier (52) diffère de celui au niveau de la partie d'assise (51).

29. Dispositif de siège à air conditionné selon la revendication 1, dans lequel la peau (26, 26B, 26C) est constituée d'une matière de surface de siège perméable à l'air (26D).

30. Dispositif de siège à air conditionné selon la revendication 26, dans lequel une partie recouvrant au moins une partie d'au moins la rainure d'aération (13A) dans la peau (26, 26B, 26C) est imperméable à l'air.

31. Dispositif de siège à air conditionné selon la revendication 26, comprenant une matière de surface imperméable à l'air (26D) recouvrant au moins une partie de la rainure d'aération (13A).

32. Dispositif de siège à air conditionné selon la revendication 1, dans lequel le premier conduit (13) est constitué d'une matière avec un module d'élasticité égal à ou plus petit que celui de l'élément support (11).

33. Dispositif de siège à air conditionné selon la revendication 1, comprenant en outre :
un capteur de volume d'air configuré pour capter un volume d'air d'une troisième soufflante d'air (76) prévue dans un dispositif de conditionnement d'air extérieur (71) qui conditionne l'air d'un espace dans lequel le dispositif de siège à air conditionné (10) est placé ; et
une unité de commande (80) configurée pour fixer le volume d'air de la première soufflante d'air (14) en fonction d'une sortie du capteur de volume d'air.

34. Dispositif de siège à air conditionné selon la revendication 33, dans lequel le dispositif de siège à air conditionné (10) est monté sur une automobile (60) et a en outre un capteur de vitesse de véhicule (82) configuré pour capter une vitesse de déplacement de l'automobile (60), et l'unité de commande (80) fixe le volume de soufflage de la première soufflante d'air (14) en fonction d'une sortie du capteur de vitesse de véhicule (82).

35. Dispositif de siège à air conditionné selon la revendication 33, dans lequel le dispositif de siège à air conditionné (10) est monté sur une automobile (60) ayant un moteur (78) et a en outre un capteur de régime de moteur (83) configuré pour capter un régime du moteur (78), et l'unité de commande (80) fixe le volume de soufflage de la première soufflante d'air (14) en fonction d'une sortie du capteur de régime de moteur (83).

36. Système de conditionnement d'air, comprenant :
un dispositif de siège à air conditionné (10) selon la revendication 1 ; et
un dispositif de conditionnement d'air extérieur (71) configuré pour conditionner l'air d'un espace dans lequel le dispositif de siège à air conditionné (10) est placé, le dispositif de conditionnement d'air extérieur (71) ayant une troisième soufflante d'air (76) ; et
une unité de commande (80) configurée pour commander un fonctionnement du dispositif de siège à air conditionné (10) et du dispositif de conditionnement d'air extérieur (71),
dans lequel le dispositif de siège à air conditionné (10) a en outre un capteur de volume d'air configuré pour capter un volume d'air de la troisième soufflante d'air (76), et l'unité de commande (80) fixe le volume de soufflage de la première soufflante d'air (14) en fonction du volume de soufflage de la troisième soufflante d'air (76).

37. Système de conditionnement d'air selon la revendication 36, dans lequel le dispositif de siège à air conditionné (10) est monté dans un habitacle (61) d'une automobile (60), et le dispositif de conditionnement d'air extérieur (71) conditionne l'air à l'intérieur de l'habitacle (61), le système de conditionnement d'air a en outre un capteur de vitesse de véhicule (82) configuré pour capter une vitesse de déplacement de l'automobile (60), et l'unité de commande (80) fixe le volume de soufflage de la première soufflante d'air (14) en fonction d'une sortie du capteur de vitesse de véhicule (82).

38. Système de conditionnement d'air selon la revendication 36, dans lequel le dispositif de siège à air conditionné (10) est monté dans un habitacle (61) d'une automobile (60), et le dispositif de conditionnement d'air extérieur (71) conditionne l'air à l'intérieur de l'habitacle (61), le système de conditionnement d'air a en outre un capteur de régime de moteur (83) configuré pour capter un régime du moteur (78), et l'unité de commande (80) fixe le volume de soufflage de la première soufflante d'air (14) en fonction d'une sortie du capteur de régime de moteur (83).
